# EUROPÄISCHE PATENTSCHRIFT

(11) **EP 3 965 952 B1**
(45) Veröffentlichungstag und Bekanntmachung des Hinweises auf die Patenterteilung: **25.03.2026**
(21) Anmeldenummer: 20731379.2
(22) Anmeldetag: 29.04.2020
(51) Int. Cl.: B05B 12/08, G05B 19/418

(54) **VERFAHREN ZUR KONTROLLE VON WERKSTÜCKEN, KONTROLLANLAGE UND BEHANDLUNGSANLAGE**
METHOD FOR INSPECTING WORKPIECES, INSPECTION SYSTEM AND PROCESSING SYSTEM
PROCÉDÉ DE CONTRÔLE DE PIÈCES, INSTALLATION DE CONTRÔLE ET INSTALLATION DE TRAITEMENT

(30) Priorität: 09.05.2019 DE 102019112099; 10.05.2019 DE 102019206849
(43) Veröffentlichungstag der Anmeldung: 16.03.2022
(60) Teilanmeldung: 26153923.3
(73) Patentinhaber: Dürr Systems AG, 74321 Bietigheim-Bissingen (DE)
(72) Erfinder: HERRE, Frank, 71739 Oberriexingen (DE); ZABEL, Michael, 71364 Winnenden (DE); WIELAND, Dietmar, 71336 Waiblingen (DE); WEHLER, Sören, 71638 Ludwigsburg (DE)
(74) Vertreter: DTS Patent- und Rechtsanwälte PartmbB
(86) Internationale Anmeldenummer: PCT/DE2020/100356
(87) Internationale Veröffentlichungsnummer: WO 2020/224714

(56) Entgegenhaltungen:
- EP-A2- 1 176 388
- DE-A1- 102004 048 937
- DE-A1- 102014 201 273
- DE-A1- 102017 208 103
- DE-B3- 102015 119 240
- US-A1- 2003 061 583

## Beschreibung

Die vorliegende Erfindung betrifft das Gebiet der Werkstückherstellung, insbesondere die Herstellung von Fahrzeugkarosserien. Während oder nach der Herstellung von Werkstücken kann beispielsweise eine manuelle oder automatische Kontrolle derselben auf Herstellungsfehler durchgeführt werden. Eine solche herkömmliche Kontrolle ermöglicht jedoch zumeist keinen aussagekräftigen und/oder zu 100 % zuverlässigen Rückschluss auf systematische Produktionsfehler.

DE 10 2017 208 103 A1 offenbart ein Verfahren zur Entfernung von Fremdkörpern aus einer flüssigen Beschichtung eines Substrats, bei dem ein Fremdkörper mittels eines Roboters erkannt und entfernt wird, wobei anschließend eine Qualitätskontrolle durchgeführt wird.

Aus der EP 1 176 388 A2 ist ein Verfahren und Kontrollsystem zur Kontrolle der Beschichtungsqualität von Werkstücken bekannt. Für die Kontrolle der Beschichtungsqualität lackierter Fahrzeugkarossen werden dabei an ausgewählten Stellen die Schichtdicke oder andere Qualitätsparameter von einem Messroboter gemessen und die Messergebnisse in einer Datenbank zusammen mit den Koordinaten der Messpunkte in einem Bezugskoordinatensystem gespeichert. Aufgrund der gespeicherten Mess- und Koordinatendaten können diese in einem Bild der Karosse auf einem Bildschirm sichtbar angezeigt werden. Ferner können zur Korrektur von Beschichtungsfehlern die Prozessparameter des für die Anlage vorgesehenen Beschichtungsprogramms aufgrund der ermittelten Koordinaten im geschlossenen Prozessregelkreis geändert werden.

Der vorliegenden Erfindung liegt daher die Aufgabe zugrunde, ein Verfahren zur Kontrolle von Werkstücken bereitzustellen, mittels welchem eine effiziente Werkstückkontrolle zur Optimierung der Werkstückqualität und/oder zur Optimierung von Produktionsabläufen möglich ist.

Diese Aufgabe wird erfindungsgemäß durch ein Verfahren gemäß Anspruch 1 gelöst.

Die vorliegende Erfindung betrifft ferner eine Kontrollanlage gemäß Anspruch 8 sowie eine Behandlungsanlage gemäß Anspruch 11.

Die diesbezügliche Aufgabe der Erfindung liegt ebenfalls darin, eine Werkstückkontrolle effizienter zu gestalten und die Qualität der Werkstücke sowie Produktionsprozesse zu optimieren.

Vorzugsweise wird eine Werkstückkontrolle so gestaltet, dass eine künstliche Intelligenz (KI) Maßnahmen zur Prozessoptimierung, Werkstoffoptimierung und/oder Produktionsoptimierung vorschlägt und/oder automatisch umsetzt, insbesondere durch Steuer- und/oder Regeleingriffe in eine Anlagensteuerung.

Das Verfahren zur Kontrolle von Werkstücken wird zur Kontrolle von Fahrzeugkarosserien und Anbauteilen verwendet.

Die Werkstücke sind Fahrzeugkarosserien, welche beispielsweise als Bestandteil von Kraftfahrzeugen wie Personenkraftwagen, Lastkraftwagen, etc. Verwendung finden.

Das Verfahren zur Kontrolle von Werkstücken umfasst vorzugsweise Folgendes: Ermitteln eines oder mehrerer Werkstückparameter der zu kontrollierenden Werkstücke und/oder eines oder mehrerer Anlagenparameter einer Behandlungsanlage zur Behandlung der zu kontrollierenden Werkstücke.

Eine Behandlung eines Werkstücks kann beispielsweise eine mechanische (Oberflächen-) Bearbeitung sein.

Vorzugsweise ist die Behandlung eines Werkstücks jedoch eine Behandlung einer Oberfläche eines Werkstoffs des Werkstücks. Beispielsweise kann eine Behandlung eine Veredelung einer Oberfläche des Werkstoffs des Wertstücks durch Aufbringen und/oder Erzeugen einer oder mehrerer, insbesondere schützender, Lackschichten oder sonstiger Beschichtungen sein.

Vorzugsweise umfasst das Verfahren ferner Folgendes:
Aufarbeitung und/oder Zusammenstellung des einen oder der mehreren Werkstückparameter und/oder des einen oder der mehreren Anlagenparameter, wobei für jedes Werkstück ein werkstückspezifischer Datensatz erstellt wird.

Durch die vorstehend genannte Aufarbeitung und/oder Zusammenstellung von Werkstückparametern und/oder Anlagenparametern kann vorzugsweise eine optimierte Datenbasis zur Kontrolle der Werkstücke geschaffen werden, was letztlich eine bessere Überprüfbarkeit der Werkstückqualität ermöglicht und zudem Rückschlüsse auf zu optimierende Anlagenparameter und/oder Werkstückeigenschaften erlaubt.

Ein werkstückspezifischer Datensatz ist insbesondere ein einem einzigen Werkstück zugeordneter Datensatz.

Jeder Datensatz kann vorzugsweise zur Ermittlung der Qualität der Werkstücke ausgewertet werden.

Ein Datensatz kann ferner vorzugsweise eine Qualitätskarte oder Qualitätsurkunde sein, welcher der Kunde entnehmen kann, dass sämtliche Vorgaben und Anforderungen an ein korrekt hergestelltes Produkt zumindest innerhalb vorgegebener Grenzwerte und/oder Toleranzen eingehalten wurden.

Ferner kann ein werkstückspezifischer Datensatz optional beispielsweise zu Vergleichszwecken Daten aus Initialisierungsprozessen und/oder Kalibrierungsprozessen enthalten. Beispielsweise können Daten eines Musterwerkstücks in einen werkstückspezifischen Datensatz aufgenommen werden, um eine leichtere Vergleichbarkeit der dem jeweiligen einzelnen Werkstück zugeordneten Daten, insbesondere Parameter, mit Referenzdaten zu ermöglichen. Die Referenzdaten können dabei insbesondere Grenzwerte oder Wertebereiche sein oder umfassen. Ferner können die Referenzdaten aus simulierten Daten bestehen oder solche innerhalb eines vorgegebenen Toleranzbandes umfassen.

Vorteilhaft kann es sein, wenn mittels der Datensätze individuell für jedes Werkstück oder gemeinsam für mehrere Werkstücke bestimmt wird, ob die Behandlung des jeweiligen Werkstücks oder der Werkstücke zu einem innerhalb vorgegebener Qualitätskriterien befindlichen Behandlungsergebnis geführt hat oder führen wird. Die werkstückspezifischen Datensätze können somit insbesondere noch während der Werkstückbehandlung oder nach der Werkstückbehandlung, insbesondere spätestens unmittelbar nach der Werkstückbehandlung, ausgewertet werden. Ferner kann alternativ oder ergänzend hierzu eine Auswertung, insbesondere eine statistische Auswertung, am Ende einer Werkstückbehandlung vorgesehen sein.

Vorteilhaft kann es sein, wenn die Bestimmung, ob die Behandlung des jeweiligen Werkstücks oder der Werkstücke zu einem innerhalb vorgegebener Qualitätskriterien befindlichen Behandlungsergebnis geführt hat oder führen wird, vor der Behandlung des jeweiligen Werkstücks oder der Werkstücke, während der Behandlung des jeweiligen Werkstücks oder der Werkstücke und/oder nach der Behandlung des jeweiligen Werkstücks oder der Werkstücke durchgeführt wird.

Insbesondere dann, wenn für diese Bestimmung Werkstückparameter und/oder Anlagenparameter herangezogen werden, welche sich auf eine Vorbehandlung, Vorbearbeitung oder vorherige Herstellung des Werkstücks beziehen, bevor ein oder mehrere Behandlungsschritte durchgeführt werden, kann vorzugsweise zumindest insoweit auf mögliche Mängel am Werkstück geschlossen werden, sofern sich diese aus der Vorbehandlung, Vorbearbeitung, Gestaltung einer Werkstoffoberfläche und/oder Herstellung des Werkstücks ergeben.

Beispielsweise kann bei Mängeln im Rohbau eines als Fahrzeugkarosserie ausgebildeten Werkstücks und/oder allgemein bei Mängeln des zur Herstellung und/oder Bearbeitung und/oder Behandlung eines Werkstücks verwendeten Materials bereits vor der Werkstückbehandlung darauf geschlossen werden, dass das Werkstück letztlich nicht mangelfrei fertiggestellt werden kann.

Als Werkstückparameter können insbesondere einzelne oder mehrere der folgenden Parameter vorgesehen sein:
- eine punktuell an dem Werkstück gemessene Werkstücktemperatur;
- flächig gemessene und/oder gemittelte Werkstücktemperatur oder Werkstücktemperaturverteilung;
- insbesondere mittels eines als Anemometer ausgebildeten Sensors gemessene, punktuelle Geschwindigkeit, insbesondere Strömungsgeschwindigkeit der Luft an und/oder um das Werkstück;
- Reflexionseigenschaften einer Werkstückoberfläche, insbesondere gemessene Reflexionseigenschaften; insbesondere kann hierbei die Messung mittels Licht im ultravioletten, im sichtbaren und/oder im infraroten Bereich erfolgen;
- Absorptionseigenschaften einer Werkstückoberfläche, insbesondere gemessene Absorptionseigenschaften; hierbei können insbesondere die Absorptionseigenschaften für Licht im ultravioletten Bereich, im sichtbaren Bereich und/oder im Infrarotbereich, beispielsweise im Bereich der Wärmestrahlung gemessen werden;
- Emissionseigenschaften einer Werkstückoberfläche, insbesondere gemessene Emissionseigenschaften; die Emission wird insbesondere im infraroten Bereich, beispielsweise aufgrund der Wärmestrahlung des Werkstücks, gemessen;
- basierend auf einer Simulation ermittelte punktuelle Werkstücktemperatur; diese mittels einer Simulation ermittelte punktuelle Werkstücktemperatur kann beispielsweise unter Verwendung von Anlagenparametern für jedes Werkstück individuell bestimmt werden;
- basierend auf einer Simulation ermittelte Temperaturverteilung an dem Werkstück; hierfür kann insbesondere auf gemessene oder ermittelte Anlagenparameter und/oder punktuelle gemessene Werkstückparameter zurückgegriffen werden; beispielsweise kann durch punktuelle Temperaturmessung mittels einer Simulation eine Temperaturverteilung an dem Werkstück simuliert und als Werkstückparameter verwendet werden;
- Informationen über die Art und/oder den Typ des jeweiligen Werkstücks;
- Informationen über physikalische und/oder produktionstechnische Werkstückkennzahlen;
- eine individuelle Werkstückidentifikationsnummer;
- Informationen über eine der Behandlung vorhergehende Vorbehandlung, Vorbearbeitung und/oder Herstellung des jeweiligen Werkstücks, insbesondere Qualität des Rohbausubstrats;
- Informationen über eine der Behandlung nachfolgende Nachbehandlung und/oder Weiterbearbeitung des jeweiligen Werkstücks.

Vorzugsweise werden die Werkstückparameter und/oder die Anlagenparameter und/oder die Anlagenparameter in den werkstückspezifischen Datensatz aufgenommen sobald diese verfügbar sind, insbesondere kontinuierlich während des gesamten Verfahrens zur Herstellung und Fertigstellung des Werkstücks oder aber schrittweise nach jeweils einem oder mehreren Behandlungs-, Bearbeitungs- und/oder Herstellungsschritten.

Sämtliche gemessenen Werkstückparameter sowie sämtliche Anlagenparameter oder noch zu beschreibende Behandlungsergebnisparameter sind beispielsweise berührungslos oder aber kontaktierend messbar.

Beispielsweise kann zur Temperaturbestimmung ein Thermokontaktelement in Kontakt mit dem Werkstück oder einem sonstigen Objekt, dessen Temperatur zu bestimmen ist, gebracht werden. Vorzugsweise erfolgt die Temperaturbestimmung jedoch berührungslos.

Hierfür werden insbesondere ein oder mehrere Pyrometer, welche insbesondere punktuell, linienförmig, das heißt eindimensional aufgelöst, oder flächig, das heißt zweidimensional aufgelöst, die Temperatur erfassen, verwendet.

Ein oder mehrere Pyrometer oder auch allgemein sonstige Sensoren sind insbesondere automatisch relativ zu einem Werkstück bewegbar, insbesondere kontinuierlich und/oder getaktet und/oder motorisch und/oder unter Nutzung oder durch einen Antrieb einer Fördervorrichtung zur Förderung der Werkstücke.

Beispielsweise kann eine Drehscheibe vorgesehen sein, an welcher ein oder mehrere Pyrometer oder auch allgemein sonstige Sensoren angeordnet sind und welche zur unterschiedlichen Positionierung derselben relativ zu einem Werkstück bewegbar, insbesondere drehbar, ist.

Alternativ oder ergänzend hierzu können mehrere beispielsweise gleichmäßig, insbesondere matrixförmig, angeordnete Pyrometer oder sonstige Sensoren vorgesehen sein. Beispielsweise kann eine 2x2 oder 3x3 oder 4x4 - Matrix aus entsprechend 4, 9 oder 16 Pyrometern oder sonstigen Sensoren zur Ermittlung eines oder mehrerer Werkstückparameter vorgesehen sein.

Die Messung erfolgt insbesondere an einer Oberfläche, welche für sämtliche Werkstücke identisch bearbeitet und oder behandelt wird. Diese Oberfläche ist insbesondere an einer Unterseite des Fahrzeugs vorgesehen, welche nicht mit einem für verschiedene Fahrzeuge unterschiedlich farbigen Decklack versehen wird. Hierdurch kann eine optimierte Vergleichbarkeit der Messergebnisse erzielt werden.

Die Unterseite ist insbesondere ein Bereich, in welchem lediglich eine KTL-Oberfläche (durch kathodische Tauchlackierung beschichtete Oberfläche) und/oder Primeroberfläche (mit Grundierung beschichtete Oberfläche) sichtbar ist.

Alternativ oder ergänzend hierzu kann eine Messung jedoch auch im Bereich der für unterschiedliche Werkstücke beispielsweise durch andere farbliche organische Polymerverbindungen unterschiedlich farbigen Oberflächen vorgesehen sein.

Sämtliche vorstehenden Ausführungen zur Temperaturmessung treffen auch auf die Messung von Reflexionseigenschaften einer Werkstückoberfläche, Absorptionseigenschaften einer Werkstückfläche und/oder sonstigen Emissionseigenschaften der Werkstückoberfläche zu.

Insbesondere können zur Messung von Glanz und/oder für DOI-Messungen (Distinctness of Image-Messungen) Reflexionsmessungen vorgesehen sein.

Insbesondere können für Colour Match-Messungen Reflexionsmessungen und/oder Adsorptionsmessungen vorgesehen sein.

Insbesondere können für Strukturscans der Oberfläche Reflexionsmessungen und/oder Adsorptionsmessungen vorgesehen sein.

Als Anlagenparameter sind vorzugsweise einer oder mehrere der folgenden Parameter vorgesehen:
- eine globale gemessene Temperatur und/oder eine gemessene zeitliche und/oder räumliche Temperaturverteilung in einer oder mehreren Behandlungsstationen; hierbei werden insbesondere diejenigen lokalen Temperaturen an Stellen längs eines Bewegungswegs der Werkstücke herangezogen, welche vorherrschten, vorherrschen und/oder vorherrschen werden, als das jeweilige Werkstück an den jeweiligen Stellen angeordnet war oder wenn das jeweilige Werkstück an den jeweiligen Stellen angeordnet ist oder sein wird; hierdurch kann insbesondere die für das jeweilige Werkstück spezifische Temperatur in der jeweiligen Behandlungsstation erfasst werden;
- ein oder mehrere Betriebsparameter einer oder mehrerer Luftführungsvorrichtungen einer oder mehrerer Behandlungsstationen; beispielsweise können solche Luftführungsvorrichtungen an Lackierstationen und/oder Trocknungszonen vorgesehen sein; als Betriebsparameter sind beispielsweise folgende Parameter vorgesehen: Stromstärke, Spannung und/oder Frequenz eines Ventilators; Volumenstrom und/oder Massenstrom der in der Luftführungsvorrichtung geführten Luft; Lufttemperatur, Luftfeuchtigkeit, Zuführtemperatur der Luft bei der Zuführung zu einem Behandlungsraum; Abführtemperatur der Luft bei der Abführung aus dem Behandlungsraum; Druck im Behandlungsraum; Leistungsdaten einer Heizungsvorrichtung, einer Kühlungsvorrichtung, einer Entfeuchtungsvorrichtung und/oder einer Befeuchtungsvorrichtung;
- ein oder mehrere Betriebsparameter einer oder mehrerer Fördervorrichtungen einer oder mehrerer Behandlungsstationen; hierbei sind insbesondere eine Geschwindigkeit, Haltezeiten, Pausen und/oder Fahrwege einzelner oder mehrerer Fördereinheiten der Fördervorrichtung berücksichtigt, insbesondere derjenigen einen oder mehreren Fördereinheiten, welche das jeweilige Werkstück fördern werden, fördern oder gefördert haben;
- ein oder mehrere Betriebsparameter einer oder mehrerer Behandlungseinheiten einer oder mehrerer Behandlungsstationen; beispielsweise bei der Beschichtung von Werkstücken unter Verwendung einer Sprühbeschichtung (Sprühlackierung) können als Betriebsparameter eine Beschichtungsart, Beschichtungsdauer, Durchflussmenge, eine Temperatur und/oder ein Verschmutzungsgrad einer Beschichtungsflüssigkeit und/oder ein Wartungszustand einer oder mehrerer Behandlungseinheiten verwendet werden; beispielsweise bei der Tauchbehandlung kann als Betriebsparameter eine Zusammensetzung, eine Temperatur, eine Gesamtnutzungsdauer und/oder ein Verschmutzungsgrad einer Tauchflüssigkeit als Betriebsparameter verwendet werden; beispielsweise bei der Trocknung als Behandlung eines oder mehrerer Werkstücke werden vorzugsweise die vorstehend als Betriebsparameter einer Lüftungsvorrichtung genannten Betriebsparameter als Betriebsparameter einer oder mehrerer Behandlungseinheiten verwendet;
- ein oder mehrere Betriebsparameter einer oder mehrerer Filteranlagen und/oder Reinigungsanlagen zur Entfernung von Verunreinigungen aus einem Luftstrom und/oder einem Behandlungsmedium zur Werkstückbehandlung; insbesondere sind als solche Betriebsparameter Daten zum Wartungszustand der Filteranlage und/oder Reinigungsanlagen vorgesehen.

Als konkrete Beispiele kann das Folgende genannt werden:
Als Betriebsparameter für eine Luftführungsvorrichtung, insbesondere eines oder mehrerer Ventilatoren, kann beispielsweise eine Stromüberwachung und/oder eine Differenzdruckmessung zum Einsatz kommen, die einen Drucksprung zwischen Saug- und Druckseite des Ventilators erfasst. Wird mit dem hierfür vorgesehenen Sensor stattdessen der Druckverlust über den Düsen und/oder an anderer Stelle insbesondere in einem Umluftkreislauf erfasst, so kann daraus (insbesondere mit Hilfe eines Korrekturfaktors) vorzugsweise die Düsenaustrittsgeschwindigkeit bestimmt werden. Die Funktion der Überwachung des Ventilators kann nach Veränderung der Sensorposition vorzugsweise dennoch weiterhin erfüllt werden. Für die Messung der Düsenaustrittsgeschwindigkeit wird vorzugsweise keine weitere Sensorik benötigt.

Ferner kann es vorgesehen sein, von der Ventilatorfrequenz auf die Düsenaustrittsgeschwindigkeit zu schließen. Hierfür wird vorzugsweise eine Alterung von Filtern einer Filteranlage, insbesondere ein Druckverlust über den Filtern, berücksichtigt.

Die Werkstückparameter und/oder Anlagenparameter können insbesondere unmittelbar zur Einschätzung einer Qualität des Werkstücks herangezogen werden.

Vorzugsweise erfolgt jedoch eine Auswertung.

Insbesondere zur Erstellung der werkstückspezifischen Datensätze werden vorzugsweise Korrelationsdaten herangezogen, welche eine Korrelation zwischen a) dem einen oder den mehreren Werkstückparametern und/oder dem einen oder den mehreren Anlagenparametern und b) einem oder mehreren Behandlungsergebnisparametern herstellen.

Beispielsweise kann unter Nutzung der gemessenen oder simulierten Temperaturen und/oder Temperaturverteilungen auf einen Aushärtungsgrad einer Beschichtung und somit auf einen wesentlichen Parameter des zu erzielenden Behandlungsergebnisses geschlossen werden.

Als Korrelationsdaten oder zur Ermittlung der Korrelationsdaten werden vorzugsweise Simulationsdaten und/oder Simulationsfunktionen verwendet. Mittels der Simulationsdaten und/oder Simulationsfunktionen werden vorzugsweise auf der Basis des einen oder der mehreren Werkstückparameter und/oder des einen oder der mehreren Anlagenparameter ein oder mehrere Behandlungsparameter und/oder ein oder mehrere Behandlungsergebnisparameter errechnet.

Ein als Korrelationsdaten oder zur Herstellung von Korrelationsdaten genutztes Simulationsmodell wird vorzugsweise durch ein oder mehrere Testfahrten eines mit Sensoren versehenen und/oder überwachten Werkstücks kalibriert. Insbesondere wird eine solche Kalibrierung regelmäßig, beispielsweise wöchentlich, zweiwöchentlich oder vierwöchentlich, durchgeführt, insbesondere um die Zuverlässigkeit der Korrelationsdaten kontinuierlich zu gewährleisten.

Gemäß dem vorstehend beschriebenen Verfahren können Werkstückparameter und/oder Anlagenparameter als gemessene Werte Eingang in den werkstückspezifischen Datensatz finden oder aber unter Verwendung einer oder mehrerer Simulationen oder sonstigen Korrelationsdaten aufgearbeitet oder sonstwie genutzt werden, wobei die sich hierbei ergebenden Parameter, insbesondere Werkstückparameter und/oder Anlagenparameter vorzugsweise Eingang in den werkstückspezifischen Datensatz finden. Sämtliche Werkstückparameter und/oder Anlagenparameter ermöglichen vorzugsweise eine Aussage oder einen Rückschluss auf die Qualität des Werkstücks.

Erst die Behandlungsergebnisparameter geben jedoch vorzugsweise exakt diejenigen Werte wieder, welche unmittelbar das Behandlungsergebnis widerspiegeln und insbesondere keiner weiteren Interpretation oder Rückschlüssen bedürfen.

Der eine oder die mehreren Behandlungsergebnisparameter können vorzugsweise durch eine unmittelbare Messung, insbesondere während und/oder unmittelbar nach dem Behandlungsprozess, beispielsweise Oberflächenveredelungsprozess, kontrolliert, insbesondere verifiziert werden.

Insbesondere kann zur Ermittlung eines oder mehrerer Behandlungsergebnisparameter eine berührungslose Messung der Oberflächenstruktur und/oder des Verlaufs und/oder des Glanzgrads einer veredelten Werkstoffoberfläche des Werkstücks erfolgen.

Die Verwendung von Korrelationsdaten, insbesondere unter Nutzung von Simulationsdaten und/oder Simulationsfunktionen, ermöglicht vorzugsweise eine drastische Reduktion der Messtechnik, welche erforderlich wäre, um dieselbe Datenmenge, insbesondere dieselben Behandlungsergebnisparameter, durch unmittelbare Messung an jedem einzelnen Werkstück zu erhalten. Insbesondere kann eine hochauflösende, dreidimensionale Überwachung und/oder Überprüfung des Werkstücks unter Verwendung von lediglich einzelnen gemessenen Werten ermöglicht werden.

Insbesondere zur Verifizierung der Korrelationsdaten aber auch zur weiteren Erhöhung der Kontrollqualität ist vorzugsweise vorgesehen, dass mittels eines oder mehrerer Sensoren während und/oder nach der Durchführung der Behandlung ein oder mehrere sensorische Behandlungsergebnisparameter ermittelt werden.

Der eine oder die mehreren sensorischen Behandlungsergebnisparameter werden vorzugsweise mit einem oder mehreren vorgegebenen und/oder simulierten Behandlungsergebnisparametern verglichen, wobei insbesondere ein Qualitätsparameter erhalten wird, welcher vorzugsweise wiedergibt, ob die Behandlung des jeweiligen Werkstücks ein oder mehrere Qualitätskriterien erfüllt.

Alternativ oder ergänzend kann wird der Qualitätsparameter Informationen über die Güte der Simulation liefern. Beispielsweise wird der Qualitätsparameter zur Validierung und/oder Verifikation und/oder Feinjustierung der Simulation, insbesondere Simulationsparametern der Simulation, verwendet.

Ein sensorischer Behandlungsergebnisparameter wird vorzugsweise durch unmittelbare berührungslose oder kontaktierende Messung an dem betreffenden Werkstück erhalten.

Vorgegebene Behandlungsparameter sind insbesondere solche, welche als gewünschte Eigenschaften eines Werkstücks vorgegeben sind.

Simulierte Behandlungsergebnisparameter sind vorzugsweise solche, welche basierend auf einem oder mehreren Werkstückparametern und/oder einem oder mehreren Anlagenparametern insbesondere unter Verwendung von Korrelationsdaten erhalten werden.

Ferner sind vorgegebene Behandlungsergebnisparameter vorzugsweise an einem Referenzwerkstück gemessene Parameter.

Als Behandlungsergebnisparameter sind vorzugsweise einer oder mehrere der folgenden Parameter vorgesehen:
- Dicke einer Beschichtung, insbesondere die jeweilige Dicke einer oder mehrerer Beschichtungen, beispielsweise einer Grundierung, eines Decklacks und/oder eines Klarlacks;
- Güte einer Beschichtung und/oder einer Substratoberfläche, insbesondere Ebenheit und/oder Rauigkeit einer Beschichtung, insbesondere einer jeden oder einzelner Schichten;
- Gleichmäßigkeit einer Dicke einer Beschichtung, insbesondere Gleichmäßigkeit einer jeden oder einzelner Schichten;
- Farbton und/oder Helligkeit und/oder Farbmetrik "Colour Match" und/oder Verlauf und/oder Glanzgrad einer Beschichtung, insbesondere vor und/oder nach der Applikation von Klarlack;
- Oberflächenstruktur und/oder Verlauf und/oder Glanzgrad einer einzelnen Schicht oder für die finale Klarlackschicht;
- Härte einer Beschichtung, insbesondere nach dem Aushärten des Decklacks und/oder des Klarlacks;
- chemische Zusammensetzung einer Beschichtung, insbesondere Vernetzungsgrad und/oder Lösungsmittelgehalt;
- Verunreinigungsgrad einer Beschichtung;
- räumliche Verteilung und/oder zeitlicher Verlauf der Temperatur des Werkstücks während und/oder nach der Durchführung einer Behandlung, insbesondere nach einem Trocknungsvorgang;
- Position von durch die Behandlung am Werkstück erzeugten lokalen Temperaturmaxima und/oder Temperaturminima;
- Informationen über gemessene, simulierte und/oder erwartete Fehlstellen oder sonstige Qualitätsmängel an dem jeweiligen Werkstück, insbesondere Position und/oder Ausmaß von Beschichtungsfehlern.

Günstig kann es sein, wenn die werkstückspezifischen Datensätze ergänzt werden um:
- ein oder mehrere werkstückspezifische sensorische Behandlungsergebnisparameter;
- ein oder mehrere werkstückspezifische vorgegebene Behandlungsergebnisparameter;
- ein oder mehrere werkstückspezifische simulierte Behandlungsergebnisparameter;
- ein oder mehrere Qualitätsparameter.

Ein Qualitätsparameter ist insbesondere ein Wert, welcher beispielsweise ohne weiteren Sollwertvergleich oder sonstige Auswertung eine Aussage über ein Qualitätskriterium des Werkstücks ermöglicht.

Beispielsweise ist ein Qualitätsparameter ein Parameter, welcher die Werte 1 oder 0 annehmen kann, was letztlich "in Ordnung" oder "mangelfrei" oder aber "nicht in Ordnung"/"mangelhaft" bedeuten kann. Ein Qualitätsparameter kann beispielsweise "korrekte Schichtdicke", "korrekter Farbton", "Temperaturgrenzwerte eingehalten", etc. sein.

Günstig kann es sein, wenn die Datensätze mehrerer Werkstücke miteinander verglichen, korreliert und/oder zusammengefasst werden, wobei vorzugsweise ein Prozessdatensatz erhalten wird, welcher insbesondere eine zeitliche Entwicklung eines oder mehrerer Anlagenparameter, eines oder mehrerer Werkstückparameter und/oder eines oder mehrerer Behandlungsergebnisparameter wiedergibt.

Der Prozessdatensatz wird vorzugsweise ausgewertet, insbesondere mittels eines Data-Mining-Verfahrens und/oder mittels eines Deep-Learning-Verfahrens. Vorzugsweise können hierdurch Rückschlüsse auf mögliche Quellen und/oder Ursachen von ermittelten und/oder zu erwartenden Qualitätsmängeln an den Werkstücken gezogen werden.

Abhängig von einem oder mehreren werkstückspezifischen Datensätzen und/oder abhängig von einem aus mehreren werkstückspezifischen Datensätzen erhältlichen Prozessdatensatz wird vorzugsweise eine Behandlungsanlage zur Behandlung der Werkstücke, insbesondere eine oder mehrere Behandlungsstationen der Behandlungsanlage, hinsichtlich eines oder mehrerer Anlagenparameter gesteuert und/oder geregelt.

Beispielsweise kann vorgesehen sein, dass abhängig von einem oder mehreren werkstückspezifischen Datensätzen und/oder abhängig von einem aus mehreren werkstückspezifischen Datensätzen erhältlichen Prozessdatensatz eine Fördervorrichtung gesteuert und/oder geregelt wird, insbesondere zur Variation und/oder zur Auswahl einer Förderstrecke, längs welcher ein jeweiliges Werkstück insbesondere zur Behandlung desselben gefördert wird.

Vorteilhaft kann es sein, wenn die Werkstücke nach der Durchführung eines oder mehrerer Behandlungsschritte, insbesondere einem oder mehreren Lackierprozessen, in einer oder mehreren Behandlungsstationen abhängig von dem Inhalt des jeweiligen werkstückspezifischen Datensatzes einer oder mehrerer Nachbehandlungsstationen zugeführt werden.

Die Nachbehandlungsstationen sind vorzugsweise automatische Behandlungsstationen. Die Werkstücke sind darin insbesondere automatisch an denjenigen Fehlstellen oder Bereichen mit sonstigen Qualitätsmängeln nachbearbeitbar, welche in dem jeweiligen werkstückspezifischen Datensatz als solche hinterlegt sind.

Eine automatische Behandlungsstation und/oder eine automatische Nachbearbeitung verzichtet insbesondere auf einen manuellen Eingriff durch einen Werker.

Alternativ hierzu kann jedoch auch vorgesehen sein, dass eine oder mehrere Nachbehandlungsstationen als manuelle Behandlungsstationen ausgebildet sind und dass die Nachbehandlung manuell durch einen oder mehrere Werker erfolgt. Auch eine Kombination von automatischer und manueller Behandlung, insbesondere Nachbehandlung, kann vorgesehen sein.

Vorteilhaft kann es sein, wenn die werkstückspezifischen Datensätze der Werkstücke während und/oder nach der Nachbehandlung abgeändert und/oder ergänzt werden, insbesondere um Werkstückparameter, welche sich auf die Durchführung der Nachbehandlung beziehen und/oder um Anlagenparameter, welche sich auf eine oder mehrere Nachbehandlungsstationen beziehen, und/oder um Behandlungsergebnisparameter, welche sich behandlungsspezifisch und/oder werkstückspezifisch aufgrund der Nachbehandlung ergeben.

Bei einer Ausgestaltung der Erfindung kann vorgesehen sein, dass die Werkstücke nach der Durchführung eines oder mehrerer Nachbehandlungsschritte abhängig von dem abgeänderten und/oder ergänzten Inhalt des jeweiligen werkstückspezifischen Datensatzes einer oder mehreren weiteren Nachbehandlungsstationen, insbesondere zur erneuten Nachbehandlung, zugeführt werden.

Alternativ oder ergänzend hierzu kann vorgesehen sein, dass die Werkstücke nach der Durchführung eines oder mehrerer Nachbehandlungsschritte abhängig von dem abgeänderten und/oder ergänzten Inhalt des jeweiligen werkstückspezifischen Datensatzes als Ausschuss gekennzeichnet und entsorgt werden.

Das beschriebene Verfahren ist insbesondere mittels einer Kontrollanlage zum Kontrollieren von Werkstücken durchführbar.

Die vorliegende Erfindung betrifft daher auch eine Kontrollanlage zum Kontrollieren von Werkstücken, nämlich Fahrzeugkarosserien und Anbauteilen.

Die Kontrollanlage umfasst dabei vorzugsweise Folgendes:
- eine oder mehrere Kontrollstationen zum Ermitteln eines oder mehrerer Werkstückparameter der zu kontrollierenden Werkstücke und/oder eines oder mehrerer Anlagenparameter einer Behandlungsanlage zur Behandlung der zu kontrollierenden Werkstücke;
- eine Steuervorrichtung, welche so eingerichtet und ausgebildet ist, dass mittels der Steuervorrichtung basierend auf dem einen oder den mehreren Werkstückparametern und/oder basierend auf dem einen oder den mehreren Anlagenparametern für jedes Werkstück ein werkstückspezifischer Datensatz erstellbar ist, insbesondere gemäß einem erfindungsgemäßen Verfahren.

Die Kontrollanlage weist vorzugsweise einzelne oder mehrere der im Zusammenhang mit dem Verfahren beschriebenen Merkmale und/oder Vorteile auf.

Die Kontrollanlage eignet sich insbesondere zur Verwendung als Bestandteil einer Behandlungsanlage zum Behandeln von Werkstücken, insbesondere Fahrzeugkarosserien.

Die vorliegende Erfindung betrifft daher auch eine Behandlungsanlage zum Behandeln von Werkstücken, welche Folgendes umfasst:
- eine oder mehrere Behandlungsstationen zum Behandeln der Werkstücke;
- eine erfindungsgemäße Kontrollanlage;
- eine Fördervorrichtung, mittels welcher Werkstücke zu einer oder mehreren Kontrollstationen der Kontrollanlage hin, durch die eine oder die mehreren Kontrollstationen hindurch und/oder von der einen oder den mehreren Kontrollstationen weg förderbar sind und/oder mittels welcher Werkstücke zu einer oder mehreren Behandlungsstationen hin, durch eine oder mehrere Behandlungsstationen hindurch und/oder von der einen oder den mehreren Behandlungsstationen weg förderbar sind.

Die erfindungsgemäße Behandlungsanlage weist vorzugsweise einzelne oder mehrere der im Zusammenhang mit dem erfindungsgemäßen Verfahren und/oder der erfindungsgemäßen Kontrollanlage beschriebenen Merkmale und/oder Vorteile auf.

Die Steuervorrichtung der Kontrollanlage ist vorzugsweise so ausgerichtet, dass sämtliche beschriebenen Verfahrensschritte durchführbar sind. Vorzugsweise sind sämtliche Bestandteile der Kontrollanlage und/oder der Behandlungsanlage so eingerichtet und ausgebildet, dass diese mittels der Steuervorrichtung ansteuerbar sind, um einzelne oder mehrere der beschriebenen Verfahrensschritte durchzuführen.

Ferner können das Verfahren, die Kontrollanlage und/oder die Behandlungsanlage einzelne oder mehrere der folgenden Merkmale und/oder Vorteile aufweisen:
Eine oder mehrere Kontrollstationen der Kontrollanlage können beispielsweise jeweils eine oder mehrere fest installierte Kontrolleinheiten aufweisen. Alternativ oder ergänzend hierzu können eine oder mehrere mobile und/oder portable Kontrolleinheiten vorgesehen sein, welche wahlweise an unterschiedlichen Kontrollstationen der Kontrollanlage anordenbar sind.

Eine oder mehrere Kontrollstationen sind dann insbesondere Aufnahmevorrichtungen für eine oder mehrere Kontrolleinheiten, welche bei Bedarf und/oder zu Einrichtungszwecken und/oder Optimierungszwecken an der jeweiligen Kontrollstation anordenbar sind.

Ein oder mehrere Werkstückparameter und/oder ein oder mehrere Anlagenparameter dienen vorzugsweise als Grundlage für eine Parametrierung eines Softwaretools, welches insbesondere ein physikalisch basiertes, algorithmengestütztes Simulationsmodell bildet oder umfasst.

Insbesondere werden für die Parametrierung und/oder eine Kalibrierung des Simulationsmodells aufgezeichnete Daten von Messfahrten genutzt, um vorzugsweise automatisiert Simulationsparameter zu extrahieren. Diese Daten werden beispielsweise mobil, insbesondere mittels Sensoren an einem Werkstück und/oder mittels auf das Werkstück gerichteter Sensoren, erfasst.

Günstig kann es sein, wenn ein oder mehrere Messfahrten durchgeführt werden, bei welchen die Anlagenparameter und/oder die Werkstückparameter innerhalb eines vorgegebenen Wertebereichs liegen, welcher zu einem mangelfreien Werkstück führt. Alternativ oder ergänzend hierzu kann vorgesehen sein, dass eine oder mehrere Messfahrten mit Anlagenparametern durchgeführt werden, welche einen gestörten Anlagenbetrieb abbilden. Hieraus kann insbesondere auf in einem späteren Produktionsbetrieb auftretende potentielle Fehlerquellen geschlossen werden.

Das Simulationsmodell bildet insbesondere Korrelationsdaten oder einen Bestandteil hiervon.

Die Korrelationsdaten erlauben vorzugsweise die Berechnung von Aufheizkurven an verschiedenen Werkstückmesspunkten für verschiedene Werkstücktypen, insbesondere verschiedenen Karosseriemesspunkten für verschiedene Karosserietypen, vorzugsweise ferner abhängig von verschiedenen Anlagenzuständen und somit unterschiedlichen Anlagenparametern. Die hierbei erhaltenen Werkstückparameter und/oder Anlagenparameter sind vorzugsweise speicherbar, insbesondere in einem oder mehreren werkstückspezifischen Datensätzen und/oder einem Prozessdatensatz.

Vorzugsweise ist durch eine Referenzmessung einer Oberflächentemperatur an einem spezifizierten Punkt eines jeden Werkstücks eine Beurteilung und Absicherung der Güte der Simulation und/oder der Korrelationsdaten möglich, insbesondere durch stationäre oder mobile Messung mittels eines als Pyrometer ausgebildeten stationären oder mobilen Sensors.

Vorzugsweise sind hierfür eine oder mehrere Messstellen an oder in einer oder mehreren Behandlungsstationen vorgesehen, um für jedes Werkstück insbesondere an kritischen Stellen während einer Behandlung einen aussagekräftigen Referenzmesswert zu erhalten. Dieser Referenzmesswert kann dann insbesondere als Werkstückparameter zur Ermittlung von einem oder mehreren Behandlungsergebnisparametern herangezogen werden.

Beispielsweise kann eine Messung eines Werkstückparameters, insbesondere einer Referenztemperatur an einer Oberfläche des Werkstücks, beispielsweise in einer als Trockner ausgebildeten Behandlungsstation zu einem Zeitpunkt und/oder an einer Stelle durchgeführt werden, wenn hohe Gradienten in einer Aufheizkurve erwartet werden. Eventuelle Abweichungen von einem vorgegebenen und/oder simulierten Aufheizverhalten können dann vorzugsweise zuverlässig detektiert und/oder ermittelt werden.

Beispielsweise dann, wenn sich aus einer Temperaturermittlung, insbesondere einer Temperaturverteilungsermittlung, eine asymmetrische Aufheizung des Werkstücks ergibt, können beispielsweise einzelne oder mehrere der folgenden Maßnahmen zur Kompensation automatisch getroffen werden, insbesondere mittels der Steuervorrichtung automatisch veranlasst werden:
- Verstellung von Einlassdüsen, insbesondere Anpassung einer Wurfweite und/oder Ausrichtung derart, dass überhitzte Bereiche weniger stark und und/oder unterkühlte Bereiche stärker mit einströmender erhitzter Luft beaufschlagt werden;
- Einstellung unterschiedlicher Volumenströme für unterschiedliche Einlassdüsen, insbesondere durch Einstellung zugehöriger Ventile und/oder Drosselklappen, beispielsweise zum Ausgleichen von Asymmetrien, die durch prozessbedingte Ungleichmäßigkeiten (z.B. am Übergang Vortrockner zu Haupttrockner, Übergang Halten zu Kühlen, etc.) bei der vorangehenden Aufheizung verursacht wurden;
- Asymmetrisches Anordnen und/oder Ausrichten der Werkstücke im Takt, d.h. das Werkstück wird beispielsweise etwas zu früh oder zu spät relativ zu einer oder mehreren Einlassdüsen angehalten und dadurch einseitig stärker beaufschlagt.

Neben der Vorhersagemöglichkeit von Temperaturverläufen ergibt sich aus der Erfindung vorzugsweise auch die Möglichkeit, die Qualität des Aufheizvorgangs eines jeden Werkstücks zu beurteilen und, wenn nötig, korrigierend und somit aktiv in die Regelung des Prozesses einzugreifen, um beispielsweise qualitätsrelevante Temperaturen zu erreichen oder eine Notstrategie bei einer Anlagenstörung fahren zu können.

Durch die Erfindung wird beispielsweise die Herstellung von Zusammenhängen zwischen Ergebnissen einer automatischen Fehlerkontrolle nach dem Durchlaufen des Prozesses und den Aufheizkurven, die das Werkstück erfahren hat, ermöglicht. Zu jeder im Rahmen einer Fehlerkontrolle überprüften Karosserie gibt es vorzugsweise eine eindeutig zugeordnete berechnete Aufheizkurve, welche insbesondere einen Bestandteil des werkzeugspezifischen Datensatzes bildet.

Die Anlagenparameter können vorzugsweise unter Verwendung von Korrelationsdaten, insbesondere einer Auswertelogik, auf diejenigen Prozessparameter oder Anlagenparameter hin optimiert werden, die in der Fehlerkontrolle die besten Ergebnisse geliefert haben. So lassen sich vorzugsweise Auswirkungen verschiedener Anlageneinstellungen des Betreibers auf die Qualitätsergebnisse festhalten und das System auf optimale Einstellungen hin optimieren, beispielsweise wie folgt:
- Einfluss der Einbrennzeit auf die Vergilbung von hellen Lacken, insbesondere hellen UNI-Lacken und/oder Klarlacken;
- Einfluss der Aufheizgradienten/Temperaturgradienten der Werkstücke auf den Verlauf und die Vernetzung des Klarlacks und damit auf den Decklackstand, die Ausbildung des Klarlacks (zum Beispiel im Hinblick auf die Appearance, die beispielsweise mit Long Wave and Short Wave Messungen oder mathematischen Ableitungen davon beurteilt werden).

Vorzugsweise erfolgt für jeden Werkstücktyp eine Initialisierung des Simulationsmodells, welches insbesondere Bestandteil der Korrelationsdaten ist oder diese bildet, während der Inbetriebnahme des Trockners, beispielsweise durch Messen der Aufheizkurven. Dabei kann es vorgesehen sein, dass die Initialisierungsfahrten mit Anlagenparametern erfolgen, die sowohl den Normalbetrieb als auch einen möglichen gestörten Betrieb abbilden.

Die Initialisierungsfahrten können insbesondere dazu dienen, ein Testsignal in Form einer Temperatursprungfunktion auf das System zu geben und mit Hilfe der gemessenen Sprungantwort für unterschiedliche Prozessparameter die Temperaturdynamik in der Zone und damit das Systemverhalten beschreiben zu können.

Vergleichbare Initialisierungen können für andere Anlagenparameter als die Temperatur vorgesehen sein.

Die Ergebnisse späterer Messfahrten zur Absicherung des Behandlungsprozesses sorgen vorzugsweise vollautomatisch für eine wiederkehrende Kalibrierung der Korrelationsdaten.

Günstig kann es sein, wenn die Übertragung der Werte bei diesen Messfahrten auf drahtlosem Wege, beispielsweise durch Telemetrie, insbesondere automatisch geschieht und es vorzugsweise keiner manuellen Datenübertragung bedarf. Auf diese Weise lassen sich vorzugsweise eventuelle Bedienungsfehler vermeiden und es kann ferner vorzugsweise eine korrekte zeitliche Synchronisation von Messdaten und Sollwerten sichergestellt werden.

Günstig kann es sein, wenn eine Schnittstelle für einen Bediener, insbesondere eine Prozessvisualisierung und/oder ein Bedienpanel, vorgesehen ist, welche beispielsweise einen Start und eine Überwachung einer Initialisierungsfahrt und/oder einer Messfahrt und/oder einer Kalibrierungsfahrt ermöglicht.

Bei einer weiteren optionalen Ausgestaltung der Erfindung kann vorgesehen sein, dass alternativ oder ergänzend zu einer Aufheizkurve als Werkstückparameter eine Überströmgeschwindigkeit, insbesondere an verschiedenen Punkten jedes einzelnen Werkstücks, ermittelt wird. Dies kann durch direkte messtechnische Bestimmung der Überströmgeschwindigkeit an einem Referenzwerkstück und Erstellung eines Modells oder indirekt durch Berechnung aus anderen Werkstückparametern und/oder Anlagenparametern, beispielsweise aus dem Aufheizverhalten, erfolgen.

Die Ermittlung der Überströmgeschwindigkeit erfolgt prozesstechnisch vorzugsweise analog zur bereits beschriebenen Ermittlung von Temperaturverläufen. An einem Messwerkstück werden an verschiedenen Messpunkten Sensoren zur Ermittlung von Geschwindigkeiten, bevorzugt Anemometer, eingesetzt. Die zeitlichen Verläufe der Geschwindigkeiten lassen sich mit Hilfe eines mobilen Datenloggers aufzeichnen. Aus der Zuordnung der erfassten Messdaten zu den Anlagenparametern (Temperaturen, Ventilatorfrequenzen, Volumenströme und Drücken) kann ein Modell gewonnen werden, das die Berechnung von Echtzeitverläufen der Geschwindigkeit an einzelnen Punkten von Produktions-Werkstücken, die mit keinerlei Sensorik ausgestattet sind, ermöglicht. Zwischen der Appearance, d.h. der Qualität der lackierten Oberfläche, kann ein kausaler Zusammenhang bestehen. Niedrige Überströmgeschwindigkeiten können diesbezüglich vorteilhaft sein.

Alternativ oder ergänzend zur Verwendung eines Messwerkstücks mit Geschwindigkeitssensoren, kann die Geschwindigkeit an einzelnen Messpunkten auch aus der Temperaturkurve, d.h. der Aufheizkinetik und bekannten oder gemessenen Werkstückeigenschaften (beispielsweise Dicke, Wärmekapazität, etc.) beispielsweise unter Verwendung eines Modells für den Wärmeübergang berechnet werden. Hierzu werden vorzugsweise die unterschiedlichen Anströmverhältnisse von Vorder- und Rückseite und/oder in einem Innenraum der Werkstücke berücksichtigt. Die Aufteilung des Wärmeeintrags über die Vorder- und Rückseite und/oder im Innenraum kann beispielsweise auf Basis von Simulationsergebnissen und charakteristischen Trocknermerkmalen erfolgen.

Die Überströmgeschwindigkeit kann einen wesentlichen Einfluss auf Ergebnisse haben, die an einer automatischen Kontrollstation und/oder einer Qualitätsinspektionsstation nach dem Trocknungsprozess erzielt werden. Eine Optimierung der Anlagenparameter auf Basis der in der Kontrollstation und/oder einer Qualitätsinspektionsstation ermittelten Qualität kann daher vorteilhaft sein.

Günstig kann es sein, wenn die Anlagenparameter innerhalb eines vorgegebenen Schwankungsbereichs um einen vorgegebenen Sollwert variiert und automatisch auf diejenigen Werte hin optimiert werden, welche die besten Qualitätsergebnisse liefern.

Diese Erfindung ist vorzugsweise nutzbar und übertragbar für bzw. auf sämtliche Durchlaufprozesse in Produktionsverfahren, bei denen sich die qualitätsrelevanten Messgrößen definieren lassen.

Beispielsweise hierfür sind die Vorbehandlung und Kathodische-Tauch-Lackierung, bei denen die Badtemperatur oder die Stromstärke einen Einfluss auf die Qualität der Karosseriebeschichtung oder Schichtdickenverteilung haben.

Die Behandlungsergebnisparameter, welche insbesondere durch Nutzung von Korrelationsdaten und/oder unter Verwendung von Werkstückparametern und/oder Anlagenparametern erhalten werden, bieten vorzugsweise Rückschlüsse auf oder Informationen über Folgendes:
- Substratqualität des Materials zur Herstellung des Werkstücks, insbesondere eines Rohbaublechs;
- Trocknungsbedingungen für jedes einzelne Werkstück;
- Qualität des Behandlungsergebnisses, insbesondere eines oder mehrerer Lackierergebnisse;
- Aushärtung des Werkstoffs und/oder der Werkstoffe, insbesondere von Stahl und/oder Aluminium;
- Gesamtaufenthaltszeit in einer jeweiligen Behandlungsstation, beispielsweise im Trockner;
- aufsummierte Prozesszeit oberhalb einer bestimmten Einbrenntemperatur;
- maximale Temperaturdifferenz, die sich im Laufe eines Trocknungsprozesses zwischen den einzelnen Messpunkten in den einzelnen Trocknungsabschnitten (z.B. Vortrockner, Haupttrockner und Kühlzone) einstellt;
- maximaler Temperaturgradient [K/min], der sich im Laufe des Trocknungsprozesses an den einzelnen Messpunkten in den einzelnen Trocknungsabschnitten (z.B. Vortrockner, Haupttrockner und Kühlzone) einstellt.

Die der Erfindung zugrundeliegenden Aufgabe wird ferner durch ein Verfahren zur Kontrolle von Werkstücken gelöst, wobei das Verfahren alternativ oder ergänzend zu einzelnen oder mehreren der übrigen beschriebenen Verfahrensmerkmale Folgendes umfasst:
Ermitteln eines oder mehrerer Werkstückparameter der zu kontrollierenden Werkstücke mittels einer automatischen Kontrollstation;
Kategorisieren der Werkstücke abhängig von mindestens einem der mittels der Kontrollstation ermittelten Werkstückparameter.

Alternativ oder ergänzend zu einer automatischen Kontrollstation kann eine manuelle Kontrollstation vorgesehen sein.

Eine automatische Kontrollstation ist insbesondere eine Kontrollstation, bei welcher die Kontrolle der Werkstücke vorzugsweise ausschließlich maschinell durchgeführt wird.

Eine manuelle Kontrollstation ist insbesondere eine Kontrollstation, in welcher die Kontrolle der Werkstücke durch eine oder mehrere Personen, gegebenenfalls mit maschineller Hilfe, durchgeführt wird.

Ferner können bei dem Verfahren mehrere Kontrollstationen, insbesondere mehrere automatische Kontrollstationen und/oder mehrere manuelle Kontrollstationen, vorgesehen sein.

Die mehreren Kontrollstationen können insbesondere funktionell identisch sein, so dass insbesondere dieselben Werkstückparameter mittels dieser Kontrollstationen ermittelbar sind.

Alternativ oder ergänzend hierzu kann vorgesehen sein, dass mehrere Kontrollstationen vorgesehen sind, welche funktionell voneinander verschieden sind, so dass die unterschiedlichen Kontrollstationen der Ermittlung unterschiedlicher Werkstückparameter dienen.

Günstig kann es sein, wenn Werkstücke nachbehandelt werden, bei welchen mittels der Kontrollstation ein oder mehrere Werkstückparameter ermittelt wurden, welche als mangelhaft einzustufen sind oder welche einen Mangel an dem Werkstück zur Folge haben.

Beispielsweise kann es vorgesehen sein, dass eine Schichtdicke einer Beschichtung, welche beispielsweise einen Werkstückparameter darstellt als zu gering ermittelt wird. Dies kann als Mangel des Werkstücks eingestuft werden. Insbesondere dann, wenn dieser Mangel lediglich lokal auftritt, kann dieser Mangel vorzugsweise durch eine Nachbehandlung behoben werden.

Ein solches Werkstück kann dann insbesondere nachbehandelt werden, um letztlich zu einem mangelfreien Werkstück zu gelangen.

Ferner kann vorgesehen sein, dass Werkstücke keiner Nachbehandlung unterzogen werden, wenn sämtliche mittels der Kontrollstation ermittelten Werkstückparameter als mangelfrei einzustufen sind und keine Mängel an dem Werkstück zur Folge haben.

Die Werkstücke sind bei dem Verfahren somit insbesondere automatisch in mehrere Kategorien kategorisierbar. Insbesondere kann eine Kategorie "mangelfrei" sowie eine Kategorie "korrigierbarer Mangel" vorgesehen sein. Die Werkstücke in der Kategorie "mangelfrei" werden vorzugsweise keiner Nachbehandlung unterzogen. Die Werkstücke der Kategorie "korrigierbarer Mangel" können vorzugsweise weiter kategorisiert werden, wobei insbesondere unterschieden werden kann in die Kategorie "automatisch korrigierbarer Mangel" und "manuelle korrigierbarer Mangel". Abhängig von dieser Kategorisierung werden die entsprechend kategorisierten Werkstücke vorzugsweise einer automatischen Nachbehandlungsstation oder einer manuellen Nachbearbeitungsstation zugeführt und darin automatisch nachbehandelt oder manuell nachbehandelt.

Ferner kann abhängig von dem ermittelten einen oder den ermittelten mehreren Werkstückparametern eine Kategorisierung von Werkstücken in die Kategorien "irreparabler Mangel" vorgesehen sein. In dieser Kategorie sind insbesondere Werkstücke vorgesehen, welche nicht durch eine Nachbehandlung in einen mangelfreien Zustand versetzt werden können. Solche Werkstücke sind insbesondere als Ausschuss zu entsorgen.

Die Werkstücke werden mittels einer Fördervorrichtung vorzugsweise abhängig von einem Ergebnis der Kategorisierung unterschiedlichen Stationen zugeführt.

Beispielsweise werden die Werkstücke der Kategorie "mangelfrei" einer Qualitätsinspektionsstation und/oder schließlich einer Lagerstation, beispielsweise einem Hochregallager, zugeführt.

Die Werkstücke der Kategorie "automatisch korrigierbarer Mangel" werden mittels der Fördervorrichtung automatisch von der Kontrollstation zu einer automatischen Nachbehandlungsstation zugeführt. Nach der automatischen Nachbehandlung werden die Werkstücke insbesondere erneut einer Kontrollstation zugeführt oder aber in einer manuellen Nachbehandlungsstation weitergehend nachbehandelt. Die Werkstücke der Kategorie "manuell korrigierbarer Mangel" werden nach der Kontrollstation mittels der Fördervorrichtung automatisch einer manuellen Nachbehandlungsstation zugeführt. Anschließend werden diese Werkstücke erneut einer Kontrollstation zugeführt.

Die Werkstücke der Kategorie "irreparable Mangel" werden insbesondere einer Entsorgungsstation zugeführt.

Erfindungsgemäß werden ein oder mehrere Werkstücke im Anschluss an die Kontrollstation einer Qualitätsinspektionsstation zugeführt.

In einer Qualitätsinspektionsstation wird insbesondere eine Qualitätsinspektion der Werkstücke durchgeführt.

Insbesondere werden die Werkstücke bei der Qualitätsinspektion auf das Ergebnis eines Behandlungsvorgangs hin überprüft.

Erfindungsgemäß werden lediglich solche Werkstücke einer Qualitätsinspektion unterzogen, welche mittels einer Kontrollstation als mangelfrei einkategorisiert wurden.

Die der Qualitätsinspektionsstation zugeführten Werkstücke sind eine Auswahl aus sämtlichen hergestellten und/oder behandelten Werkstücken. Vorzugsweise werden nur diese Werkstücke einer Qualitätsinspektion unterzogen.

Dabei kann insbesondere vorgesehen sein, dass statistisch verteilt einzelne Werkstücke, beispielsweise jedes zweite oder jedes dritte Werkstück, zur Zuführung zur Qualitätsstation ausgewählt und dort einer Qualitätsinspektion unterzogen werden.

Ferner kann vorgesehen sein, dass diejenigen Werkstücke, zu der Qualitätsinspektionsstation zugeführt und einer Qualitätsinspektion unterzogen werden, welche nach einer Abänderung von Anlagenparametern, beispielsweise nach einem Farbwechsel bei der Lackierung, behandelt wurden und welche vorzugsweise von der Kontrollstation als mangelfrei einkategorisiert wurden.

Ferner kann vorgesehen sein, dass sämtliche hergestellten und/oder behandelten Werkstücke der Qualitätsinspektionsstation zugeführt und einer Qualitätsinspektion unterzogen werden.

Vorzugsweise wird nicht jedes der hergestellten und/oder behandelten Werkstücke der Qualitätsinspektion zugeführt. Vielmehr wird vorzugsweise eine spezielle Auswahl aus diesen Werkstücken getroffen.

Die Auswahl der der Qualitätsinspektionsstation zuzuführenden Werkstücke basiert vorzugsweise auf gemessenen und/oder berechneten und/oder simulierten Werkstückparametern und/oder basierend auf gemessenen und/oder berechneten und/oder simulierten Behandlungsergebnisparametern, welche insbesondere einen oder mehrere der folgenden Parameter umfassen oder darauf basieren:
- Farbton und/oder Helligkeit und/oder Farbmetrik "Colour Match" und/oder Verlauf und/oder Glanzgrad einer Beschichtung;
- Güte einer Beschichtung und/oder einer Substratoberfläche, insbesondere Ebenheit und/oder Rauigkeit einer Beschichtung, insbesondere einer jeden oder einzelner Schichten;
- Oberflächenstruktur und/oder Verlauf und/oder Glanzgrad einer einzelnen Schicht oder für die finale Klarlackschicht;
- Gleichmäßigkeit einer Schichtdicke einer Beschichtung;
- Dicke einer Beschichtung;
- Härte einer Beschichtung;
- chemische Zusammensetzung einer Beschichtung, insbesondere Vernetzungsgrad und/oder Lösungsgehalt;
- Informationen über die Art und/oder den Typ des jeweiligen Werkstücks;
- Informationen über physikalische und/oder produktionstechnische Werkstückkennzahlen;
- eine individuelle Werkstückidentifikationsnummer;
- Informationen über eine der Behandlung vorhergehenden Herstellung und/oder Bearbeitung des jeweiligen Werkstücks, insbesondere Qualität des Rohbausubstrats;
- Informationen über eine der Behandlung nachfolgenden Nachbehandlung und/oder Weiterbehandlung des jeweiligen Werkstücks;
- Informationen über gemessene, simulierte und/oder erwartete Fehlstellen oder sonstige Qualitätsmängel an dem jeweiligen Werkstück, insbesondere Position und/oder Ausmaß von Beschichtungsfehlern.

Bei der Qualitätsinspektion werden vorzugsweise einer oder mehrere der folgenden Parameter insbesondere automatisch oder manuell gemessen:
- Farbton und/oder Helligkeit und/oder Farbmetrik "Colour Match" und/oder Verlauf und/oder Glanzgrad einer Beschichtung;
- Güte einer Beschichtung und/oder einer Substratoberfläche, insbesondere Ebenheit und/oder Rauigkeit einer Beschichtung, insbesondere einer jeden oder einzelner Schichten;
- Oberflächenstruktur und/oder Verlauf und/oder Glanzgrad einer einzelnen Schicht oder für die finale Klarlackschicht;
- Gleichmäßigkeit einer Schichtdicke einer Beschichtung;
- Dicke einer Beschichtung;
- Härte einer Beschichtung;
- chemische Zusammensetzung einer Beschichtung, insbesondere Vernetzungsgrad und/oder Lösungsmittelgehalt;
- Verunreinigungsgrad einer Beschichtung;
- Reflexionseigenschaften einer Werkstückoberfläche;
- Absorptionseigenschaften einer Werkstückoberfläche;
- Emissionseigenschaften einer Werkstückoberfläche.

Vorteilhaft kann es sein, wenn bei der Qualitätsinspektion nur an denjenigen Stellen der Werkstücke Qualitätsmessungen durchgeführt werden, welche gemäß einem Ergebnis der Kontrolle in der Kontrollstation mangelfrei sind.

Erfindungsgemäß werden Ergebnisse der Qualitätsinspektion zur Justierung eines oder mehrerer Anlagenparameter in einer oder mehreren Behandlungsstationen zur Behandlung der Werkstücke verwendet, insbesondere unabhängig davon, ob die Qualitätsmessung einen Mangel an einem oder mehreren Werkstücken ermittelt hat oder nicht.

Beispielsweise kann ein Temperaturverlauf in einer als Trockner ausgebildeten Behandlungsstation justiert werden, wenn im Rahmen der Qualitätsinspektion, insbesondere der Qualitätsmessungen, eine aus einer lokalen Überhitzung resultierende Farbabweichung ermittelt wurde. Selbst wenn die ermittelte Farbabweichung innerhalb vorgegebener Toleranzen liegt, kann die Justierung des Temperaturverlaufs vorteilhaft sein, insbesondere um die Anzahl an potentiell problematischen Fehlstellen zu minimieren.

Günstig kann es daher sein, wenn basierend auf Ergebnissen der Qualitätsinspektion eine Justierung eines oder mehrerer Anlagenparameter, insbesondere in einer oder mehreren Behandlungsstationen zur Behandlung der Werkstücke, selbst dann durchgeführt wird, wenn der eine oder die mehreren Anlagenparameter innerhalb vorgegebener Grenzwerte liegen, wobei insbesondere bereits Tendenzen in einer zeitlichen Entwicklung des einen oder der mehreren Anlagenparameter abgemildert oder kompensiert werden. Erfindungsgemäß erfolgt die Justierung eines oder mehrerer Anlagenparameter automatisch, insbesondere ohne einen Nutzereingriff. Es kann jedoch auch vorgesehen sein, dass die Justierung eines oder mehrerer Anlagenparameter mittels einer Steuervorrichtung einem Nutzer oder Bediener der Anlage vorgeschlagen und erst dann durchgeführt wird, wenn dieser den Vorschlag freigibt.

Das erfindungsgemäße Verfahren eignet sich insbesondere zur Durchführung in einer Kontrollanlage.

Die Kontrollanlage weist dabei vorzugsweise alternativ oder ergänzend zu der bereits beschriebenen Kontrollanlage Folgendes auf:
eine oder mehrere Kontrollstationen zum automatischen Ermitteln eines oder mehrerer Werkstückparameter der zu kontrollierenden Werkstücke;
eine Steuervorrichtung, welche so eingerichtet und ausgebildet ist, dass mittels der Steuervorrichtung die Werkstücke kategorisierbar sind abhängig von mindestens einem der mittels der einen oder der mehreren Kontrollstationen ermittelten Werkstückparameter; und
eine Qualitätsinspektionsstation im Anschluss an die eine oder die mehreren Kontrollstationen zur Qualitätsmessung eines oder mehrerer Werkstücke,
wobei die Ergebnisse der Qualitätsmessungen zur Justierung eines oder mehrerer Anlagenparameter in einer oder mehreren Behandlungsstationen zur Behandlung der Werkstücke verwendbar sind.

Mittels der Steuervorrichtung ist die Kontrollanlage insbesondere derart steuerbar, dass das beschriebene Verfahren durchführbar ist.

Die Kontrollanlage weist vorzugsweise einzelne oder mehrere der im Zusammenhang mit dem Verfahren beschriebenen Merkmale und/oder Vorteile auf.

Die eine oder die mehreren Kontrollstationen umfassen vorzugsweise jeweils eine oder mehrere Kontrolleinheiten.

Eine oder mehrere Kontrolleinheiten können beispielsweise als Roboter ausgebildet sein oder einen Roboter umfassen.

Die eine oder die mehreren Kontrolleinheiten können ferner zugleich eine oder mehrere Behandlungseinheiten bilden oder Bestandteil derselben sein.

Insbesondere kann ein Roboter sowohl eine Behandlungseinheit als auch eine Kontrolleinheit bilden und zugleich oder alternierend der Behandlung sowie der Kontrolle von Werkstücken dienen.

Eine Kontrolleinheit kann beispielsweise einen oder mehrere Sensoren umfassen, welche vorliegend auch als Kontrollsensoren bezeichnet werden.

Ein Kontrollsensor ist beispielsweise eine Kamera, ein Flächensensor, ein Liniensensor und/oder ein Punktsensor, wobei jeweils eine Detektion von sichtbarem Licht, UV-Strahlung und/oder Infrarotstrahlung, beispielsweise Wärmestrahlung, vorgesehen ist.

Ein Kontrollsensor, aber auch jeder andere Sensor, kann beispielsweise gegen Erhitzung und/oder Beschädigung und/oder Verunreinigung geschützt sein. Hierzu kann beispielsweise eine Luftspülung oder sonstige Spülung in einem Gehäuse des Kontrollsensors oder aber in einer Umgebung desselben vorgesehen sein. Insbesondere bei der Druckluftspülung kann beispielsweise eine Druckluftleitung zusammen mit einer Datenleitung und/oder Stromleitung zur Versorgung des jeweiligen Kontrollsensors in einem gemeinsamen Medienkanal oder Kabelkanal geführt sein.

Vorzugsweise sind mehrere solcher Kontrollsensoren vorgesehen.

Bei einer Ausgestaltung der Erfindung kann vorgesehen sein, dass eine oder mehrere Kontrollstationen als ein Portal ausgebildet sind, durch welches die Werkstücke zur Kontrolle derselben hindurchförderbar sind.

Insbesondere sind ein oder mehrere Werkstücke mittels einer Fördervorrichtung durch eine oder mehrere als Portal ausgebildete Kontrollstationen hindurchförderbar.

Alternativ hierzu kann vorgesehen sein, dass eine oder mehrere Kontrollstationen als Portal ausgebildet sind, welches zur Kontrolle der Werkstücke über dieselben hinweg verfahrbar ist.

Die Kontrollanlage eignet sich insbesondere zur Verwendung in einer Behandlungsanlage.

Die Erfindung betrifft daher auch eine Behandlungsanlage, welche beispielsweise einzelne oder mehrere der vorstehend beschriebenen Merkmale und/oder Vorteile einer Behandlungsanlage aufweist.

Die Behandlungsanlage umfasst ferner Folgendes:
eine oder mehrere Behandlungsstationen zum Behandeln der Werkstücke;
eine erfindungsgemäße Kontrollanlage;
eine Fördervorrichtung, mittels welcher Werkstücke zu einer oder mehreren Kontrollstationen der Kontrollanlage hin, durch die eine oder die mehreren Kontrollstationen hindurch und/oder von der einen oder den mehreren Kontrollstationen weg förderbar sind und/oder mittels welcher Werkstücke zu einer oder mehreren Behandlungsstationen hin, durch eine oder mehrere Behandlungsstationen hindurch und/oder von der einen oder den mehreren Behandlungsstationen weg förderbar sind.

Günstig kann es sein, wenn eine oder mehrere Kontrollstationen in eine Behandlungsstation und/oder in eine Nachbehandlungsstation der Behandlungsanlage integriert sind. Mittels einer oder mehrerer Behandlungseinheiten der Behandlungsstation und/oder der Nachbehandlungsstation, welche vorzugsweise jeweils eine oder mehrere Kontrolleinheiten aufweisen, ist vorzugsweise eine Kontrolle des jeweiligen Werkstücks durchführbar.

Um die Qualität einer beispielsweise mit Lackmaterialien veredelten Werkstückoberfläche insbesondere nach einer Fertigstellung des Werkstücks in einer Behandlungsanlage und/oder nach einer Kontrolle des Werkstücks in einer Kontrollzone oder Kontrollstation schnellstmöglich zu beurteilen, sodass möglichst geringe zeitliche und/oder finanzielle Einbußen und/oder Verluste entstehen, wird vorgeschlagen, mittels einer automatischen Kontrollstation qualitative Werkstückparameter nach der Behandlung ( insbesondere einer Oberflächenveredelung) zu vermessen, zu beseitigen und die Ergebnisse aus Anlagenparametern und/oder Werkstückparametern innerhalb der gesamten Produktionskette als spezifische Lebensakte für das Werkstück zu speichern.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen vertikalen Längsschnitt durch eine als Lackieranlage ausgebildete Behandlungsstation einer Behandlungsanlage zur Behandlung von Werkstücken;
- Fig. 2: eine schematische perspektivische Schnittdarstellung einer als Trockner ausgebildeten Behandlungsstation der Behandlungsanlage;
- Fig. 3: eine schematische perspektivische Schnittdarstellung eines Trocknermoduls des Trockners aus Fig. 2;
- Fig. 4: einen schematischen vertikalen Längsschnitt durch eine Auslassschleuse einer Behandlungsstation der Behandlungsanlage;
- Fig. 5: eine schematische Schnittdarstellung eines als Pyrometer ausgebildeten Sensors;
- Fig. 6: eine schematische perspektivische Darstellung einer Nachbehandlungsstation der Nachbehandlungsanlage;
- Fig. 7: eine schematische Seitenansicht eines Fahrzeugs zum Transportieren von Werkstücken;
- Fig. 8: eine schematische perspektivische Darstellung des Fahrzeugs aus Fig. 7;
- Fig. 9: ein Diagramm zur Illustration eines Verfahrensablaufs zur Kontrolle und Nachbehandlung von Werkstücken;
- Fig. 10: ein weiteres Diagramm zur Illustration des Verfahrensablaufs in vereinfachter Darstellung; und
- Fig. 11: ein weiteres Diagramm zur Illustration eines alternativen Verfahrensablaufs.

Gleiche oder funktional äquivalente Elemente sind in sämtlichen Figuren mit denselben Bezugszeichen versehen.

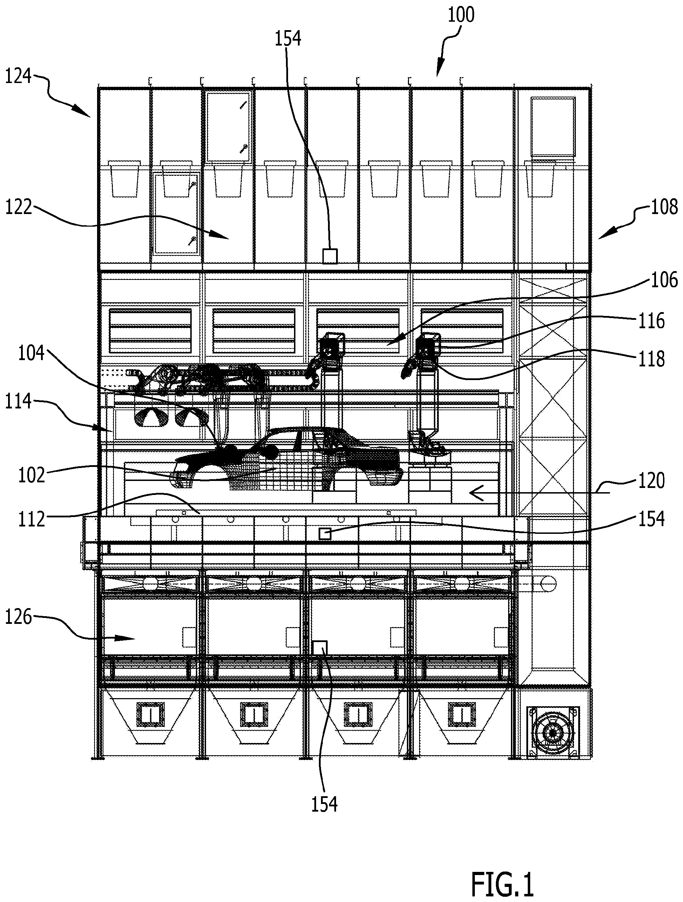

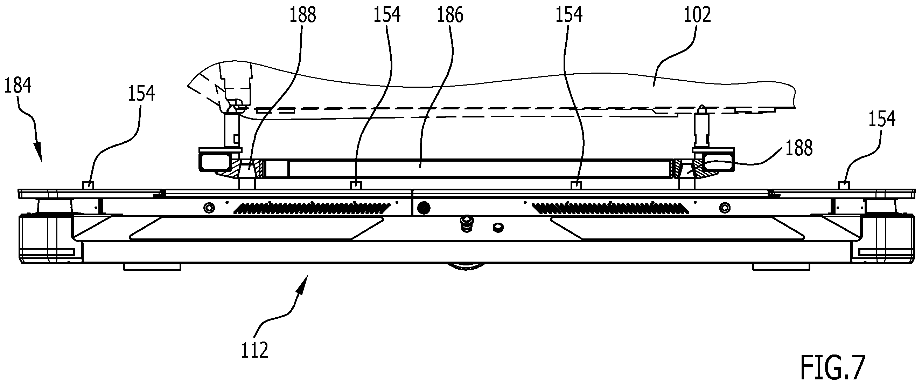

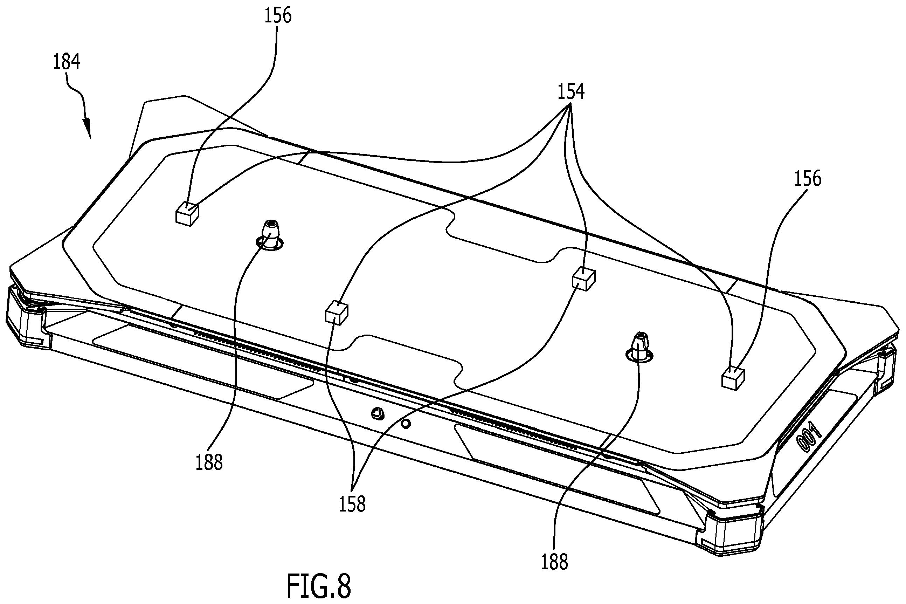

Eine in den Figuren 1 bis 8 dargestellte Ausführungsform einer als Ganzes mit 100 bezeichneten Behandlungsanlage dient beispielsweise der Behandlung von Werkstücken 102, insbesondere Fahrzeugkarosserien 104.

Die Behandlungsanlage 100 dient insbesondere der Beschichtung von Werkstücken 102 und umfasst als solche beispielsweise mehrere Behandlungsstationen 106.

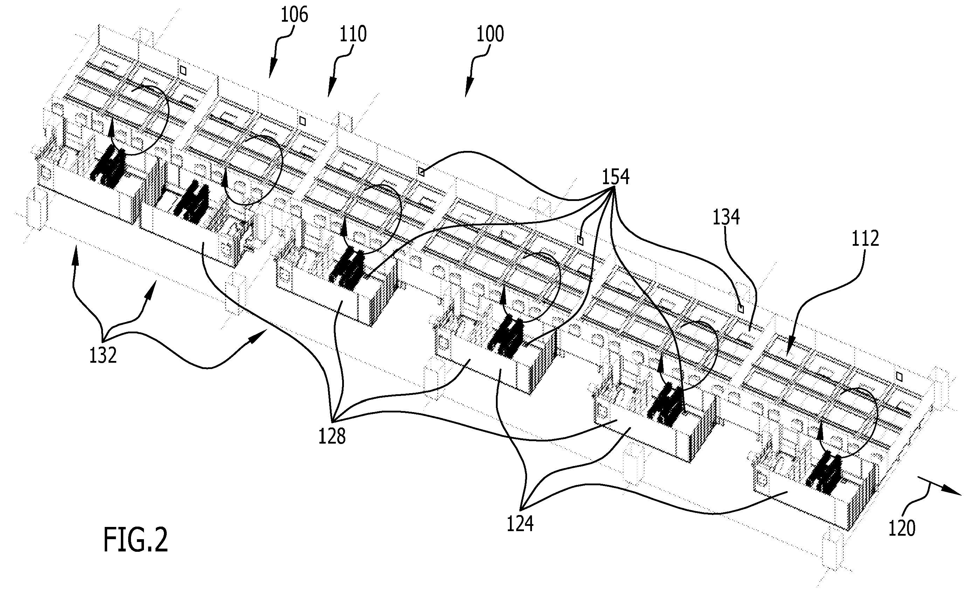

Insbesondere sind eine oder mehrere als Lackieranlage 108 ausgebildete Behandlungsstationen 106 vorgesehen, an welche sich insbesondere eine oder mehrere als Trockner 110 ausgebildete Behandlungseinheiten 106 anschließen (siehe die Fig. 1 und 2).

Die Behandlungsanlage 100 umfasst insbesondere eine Fördervorrichtung 112, mittels welcher die Werkstücke 102 durch die Behandlungsanlage 100 hindurch förderbar sind. Insbesondere sind die Werkstücke 102 mittels der Fördervorrichtung 112 von einer Behandlungsstation 106 zur nächsten Behandlungsstation 106 förderbar.

Die als Lackieranlage 108 ausgebildete Behandlungsstation 106 umfasst insbesondere einen Lackierraum 114, in welchem eine oder mehrere Behandlungseinheiten 116, beispielsweise Lackierroboter 118, angeordnet sind.

Die Werkstücke 102 sind insbesondere in einer Förderrichtung 120 durch den Lackierraum 114 hindurch förderbar.

Oberhalb des Lackierraums 114 ist insbesondere ein Plenum 122 einer Luftführungsvorrichtung 124 zur Zuführung von Luft zu dem Lackierraum 114 angeordnet.

Unterhalb des Lackierraums 114 ist vorzugsweise eine Filteranlage 126 zur Reinigung der aus dem Lackierraum 114 abgeführten Luft angeordnet.

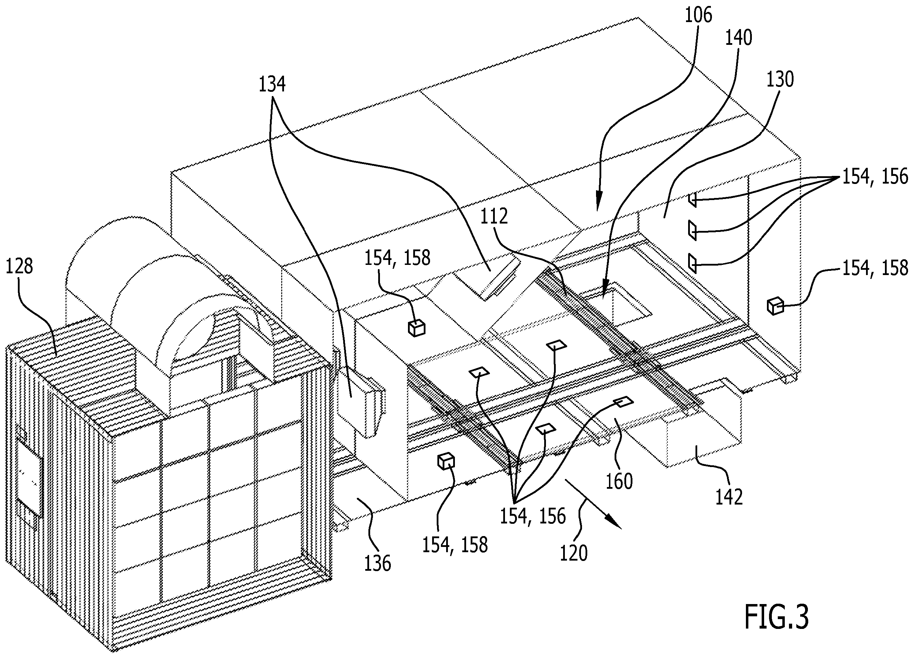

Wie insbesondere aus den Fig. 2 und 3 hervorgeht, umfasst die als Trockner 110 ausgebildete Behandlungsstation 106 insbesondere mehrere Luftführungsvorrichtung 124, welche beispielsweise jeweils als Umluftmodul 128 ausgebildet sind und gemeinsam mit jeweils einem Trockenraumabschnitt 130 mehrere Trocknermodule 132 des Trockners 110 bilden.

Die Trockenraumabschnitte 130 bilden zusammengenommen einen Trocknerraum 134 des Trockners 110.

Die Werkstücke 102 sind mittels der Fördervorrichtung 112 in der Förderrichtung 120 durch den Trocknerraum 134 hindurchförderbar.

Jedes Umluftmodul 128 des Trockners 110 ist vorzugsweise über einen Verteilerraum 136 der Luftführungsvorrichtung 124 des Trockners 110 mit dem jeweils zugehörigen Trocknerraumabschnitt 130 verbunden.

Über den Verteilerraum 136 kann die im Umluftmodul 128 konditionierte Luft verteilt, insbesondere gleichmäßig verteilt und einer oder mehreren Zuführvorrichtungen 138, beispielsweise Einlassdüsen, zugeführt werden.

Über die Zuführvorrichtung 138 wird Zuluft in den Trocknerraumabschnitt 130 eingeleitet.

Über eine oder mehrere Abführöffnungen 140 wird Abluft aus dem jeweiligen Trocknerraumabschnitt 130 abgeführt und beispielsweise über einen Abführkanal 142 gesammelt und/oder zu dem Umluftmodul 128 zur erneuten Konditionierung rückgeführt.

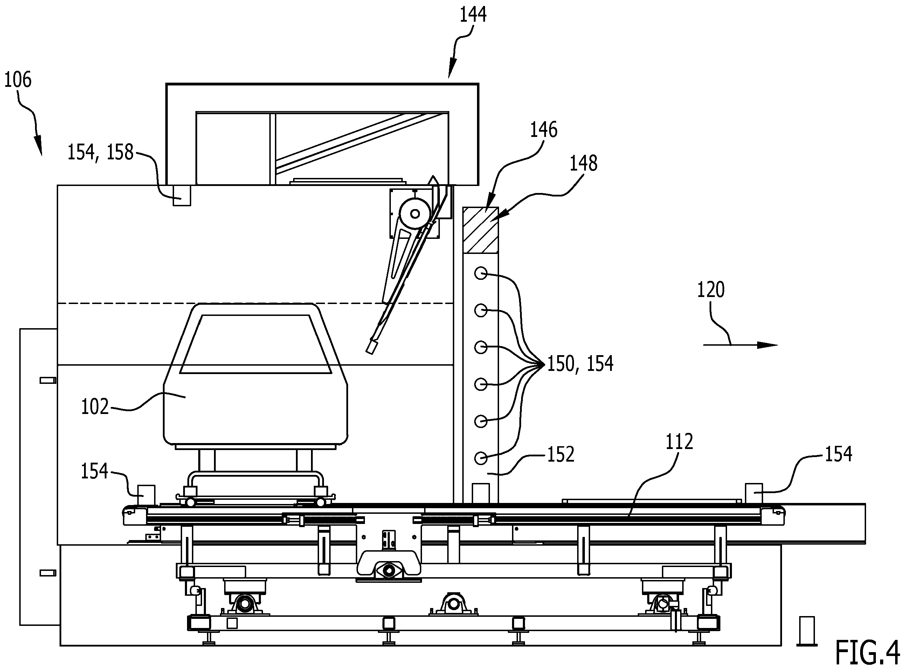

Wie insbesondere Fig. 4 zu entnehmen ist, ist an einem Ende einer Behandlungsstation 106 vorzugsweise eine Auslassschleuse 144 angeordnet. Mittels einer solchen Auslassschleuse 144 kann insbesondere eine in der Behandlungsstation 106 herrschende Atmosphäre optimiert werden, indem Störungen, welche sich aus der Entfernung der Werkstücke 102 aus dem jeweiligen Behandlungsraum ergeben, minimiert werden.

Wenn nun die Werkstücke 102 in der Lackieranlage 108 lackiert und in dem Trockner 110 getrocknet wurden, werden diese beispielsweise im Anschluss an den Trockner 110 einer (nicht dargestellten) manuellen Kontrollstation zugeführt. An dieser Kontrollstation wird beispielsweise durch entsprechend geschultes Personal überprüft, ob das Werkstück 102 die erforderlichen Qualitätskriterien erfüllt. Beispielsweise wird überprüft, ob ein aufgebrachter Lack eine vorgegebene Farbe aufweist und frei von Verunreinigungen und sonstigen Lackfehlern ist.

Wenn ein Fehler erkannt wird, kann dieser beispielsweise manuell durch Polieren behoben werden.

Vorteilhaft kann es jedoch sein, wenn die Fehlerkontrolle und/oder eine Nachbehandlung der Werkstücke 102 automatisch erfolgt.

Wie insbesondere Fig. 4 zu entnehmen ist, umfasst die Behandlungsanlage 100 hierfür vorzugsweise eine Kontrollstation 146, welche insbesondere eine automatische Kontrollstation 146 ist.

Die Kontrollstation 146 kann beispielsweise als ein Portal 148 ausgebildet sein, durch welche das Werkstück 102 zur Kontrolle desselben hindurchführbar ist.

Alternativ hierzu kann die Kontrollstation 146 in einem separaten Kontrollraum oder Kontrollbereich angeordnet sein, zu welchem die Werkstücke 102 mittels der Fördervorrichtung 112 förderbar sind.

Die Kontrollstation 146 umfasst vorzugsweise in jeder denkbaren Ausführungsform eine oder mehrere Kontrolleinheiten 150, welche insbesondere an einer oder mehreren Aufnahmevorrichtungen 152 angeordnet sind.

Die Kontrolleinheiten 150 können dabei permanent an der jeweiligen Aufnahmevorrichtung 152 angeordnet sein. Alternativ oder ergänzend hierzu kann vorgesehen sein, dass eine oder mehrere Kontrolleinheiten 150 mobil und/oder portabel sind und lediglich temporär an entsprechenden Aufnahmevorrichtungen 152 anordenbar sind.

Eine Kontrolleinheit 150 ist oder umfasst insbesondere einen oder mehrere Sensoren 154.

Die Behandlungsanlage 100 umfasst auch unabhängig von der Kontrollstation 146 und/oder koordiniert mit der Kontrollstation 146 arbeitende Sensoren 154.

Sämtliche Sensoren 154 dienen vorzugsweise der Erfassung von Werkstückparametern und/oder Anlagenparametern.

Werkstückparameter sind dabei solche Parameter, welche sich auf das jeweils zu behandelnde Werkstück 102 beziehen.

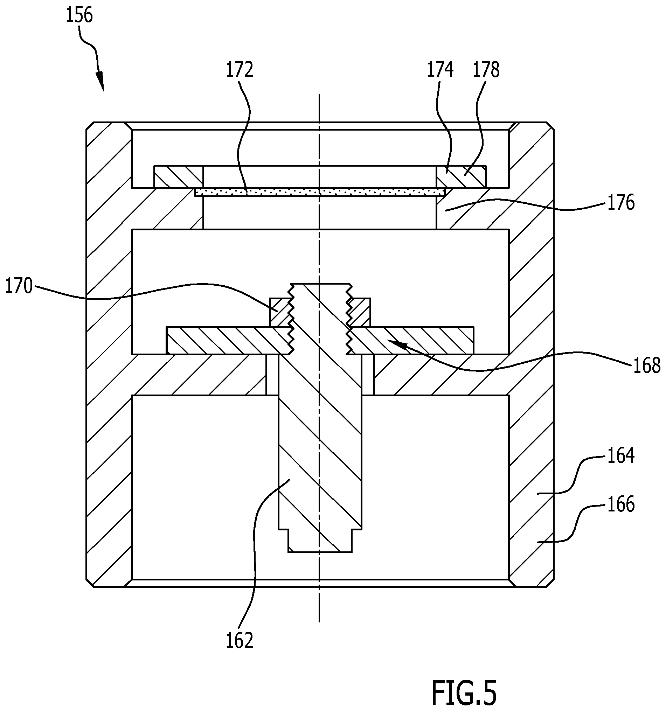

Beispielsweise können Sensoren 154, welche die Temperatur messen, beispielsweise ein Pyrometer 156 (siehe Fig. 5), eine Werkstücktemperatur erfassen und somit einen Werkstückparameter ermitteln.

Ferner können beispielsweise die Anlagentemperaturen und/oder Lufttemperaturen mittels eines oder mehrerer als Thermometer ausgebildeter Sensoren 154 erfasst werden. Insbesondere sind solche Temperaturen die als Kontakttemperatursensoren 158 ausgebildeten Sensoren 154 beispielsweise in der als Trockner 110 ausgebildeten Behandlungsstation 106. Mittels solcher Kontakttemperatursensoren 158 kann insbesondere die Temperatur einer die Kontakttemperatursensoren 158 umströmenden Luft einfach ermittelt werden.

Insbesondere in einer Lackieranlage 108 und/oder einem Trockner 110 sind die Sensoren 154 vorzugsweise fest installiert.

Die Sensoren 154 erfassen dabei insbesondere eine Lufttemperatur im Plenum 122, eine Lufttemperatur in der Filteranlage 126 und/oder eine Lufttemperatur im Lackierraum 114.

Ferner kann im Lackierraum 114 beispielsweise ein Pyrometer 156 vorgesehen sein, um berührungslos eine Werkstücktemperatur des Werkstücks 102 zu ermitteln.

Im Trockner 110 können beispielsweise fest installierte Sensoren 154 im Umluftmodul 128, im Verteilerraum 136 und/oder im Trocknerraum 134 angeordnet sein. Ferner können Sensoren 154 beispielsweise im Abführkanal 142 vorgesehen sein.

Günstig kann es sein, wenn insbesondere in einem Boden 160 einer Behandlungsstation 106 ein oder mehrere Sensoren 154 angeordnet sind.

Ein oder mehrere Sensoren 154 können dabei beispielsweise als Pyrometer 156 ausgebildet sein und insbesondere berührungslos eine Werkstücktemperatur an einer Unterseite des Werkstücks 102 erfassen.

Insbesondere zur Vermeidung von Verunreinigungen und/oder zur Vermeidung von zu hohen Temperaturen an einer Pyrometermesseinheit 162 eines Pyrometers 156 kann, wie beispielsweise Fig. 5 beispielhaft zu entnehmen ist, die Pyrometermesseinheit 162 in einem Gehäuse 164, welches beispielsweise als Buchse 166 ausgebildet ist, angeordnet und/oder aufgenommen sein.

Die Pyrometermesseinheit 162 ist dabei insbesondere an einer Aufnahme 168 des Gehäuses 164 gelagert, beispielsweise eingeschraubt und/oder mittels einer Kontermutter 170 fixiert.

An einem dem Behandlungsraum der jeweiligen Behandlungsstation 106 zugewandten Ende des Gehäuses 164 weist dieses vorzugsweise ein Fensterelement 172 auf, mittels welchem die Pyrometermesseinheit 162 vor einer Atmosphäre im jeweiligen Behandlungsraum geschützt ist.

Das Fensterelement 172 ist beispielsweise aus Zinksulfid (ZnS) gebildet und ermöglicht somit insbesondere eine Durchlässigkeit für einen Wellenlängenbereich, welcher insbesondere ultraviolette Strahlung, sichtbares Licht und Infrarotstrahlung umfasst.

Das Fensterelement 172 ist beispielsweise mittels eines Halteelements 174 des Pyrometers 156 an einer Fensterauflage 176 des Gehäuses 164 gehalten.

Das Halteelement 174 ist beispielsweise ein Haltering 178 zur Fixierung, insbesondere zum Einspannen, des Fensterelements 172.

Das Pyrometer 156 kann ferner alternativ oder ergänzend zu dem Fensterelement 172 eine (nicht dargestellte) Abdeckung aufweisen. Diese Abdeckung ist dann insbesondere beweglich ausgebildet und wird vorzugsweise nur dann geöffnet, wenn eine Messung mittels der Pyrometermesseinheit 162 durchgeführt werden soll. Auch mittels einer solchen Abdeckung kann die Pyrometermesseinheit 162 vorzugsweise effizient geschützt werden.

Ferner kann eine (nicht dargestellte) (Luft-)Spülung des Gehäuses 164 und/oder einer Umgebung des Pyrometers 156 vorgesehen sein, um insbesondere die Pyrometermesseinheit 162 und/oder das Fensterelement 172 gegen ein Erhitzen und/oder eine Verunreinigung zu schützen.

Die vorstehend genannten Sensoren 154 sowie die genannten Positionen derselben ermöglichen vorzugsweise eine umfassende Datensammlung, welche insbesondere Rückschlüsse auf ein Behandlungsergebnis der Werkstücke 102 ermöglichen.

Insbesondere mittels der Kontrollstation 146 können vorzugsweise Fehler in oder an einer behandelten Oberfläche des Werkstücks 102 erkannt und lokalisiert werden. Dies ermöglicht eine automatische Nachbehandlung des Werkstücks 102 um das Werkstück 102 von Mängeln zu befreien.

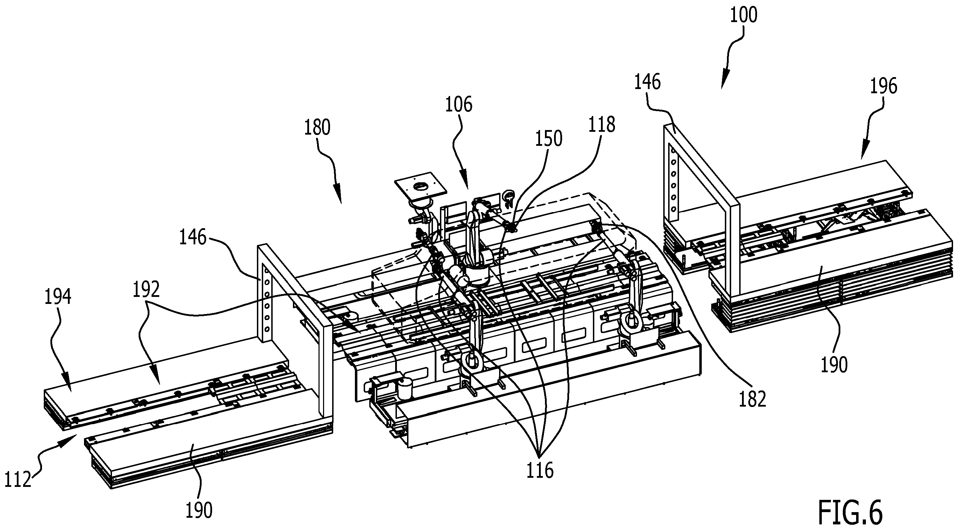

Wie insbesondere Fig. 6 zu entnehmen ist, umfasst die Behandlungsanlage 100 daher vorzugsweise eine Nachbehandlungsstation 180, welche ebenfalls eine Behandlungsstation 106 der Behandlungsanlage 100 bildet.

Die Nachbehandlungsstation 180 umfasst vorzugsweise eine oder mehrere Behandlungseinheiten 116.

Eine oder mehrere Behandlungseinheiten 116 sind beispielsweise als Lackierroboter 118 ausgebildet.

Eine oder mehrere Behandlungseinheiten 118 sind beispielsweise als ein Polierroboter 182 ausgebildet.

Eine oder mehrere Behandlungseinheiten 116 sind ferner beispielsweise als eine Kontrolleinheit 150 ausgebildet.

Insbesondere sind sämtliche Behandlungseinheiten 116 Roboter, welche eine Behandlung, insbesondere ein Polieren und/oder Lackieren, und/oder eine Kontrolle der Werkstücke 102 ermöglichen.

Die Roboter können dabei insbesondere einen (nicht näher dargestellten) Wechselkopf aufweisen, so dass mittels desselben Roboters wahlweise eine Behandlung, beispielsweise ein Lackiervorgang und/oder ein Poliervorgang und/oder eine Kontrolle der Werkstücke 102 erfolgen kann.

Die Nachbehandlungsstation 180, insbesondere die eine oder die mehreren Behandlungseinheiten 116, werden insbesondere mittels einer (nicht dargestellten) Steuervorrichtung der Behandlungsanlage 100 angesteuert, insbesondere unter Nutzung von mittels der Kontrollstation 146 erhaltenen Werkstückparametern.

Insbesondere werden von der Kontrollstation 146 die Position und/oder das Ausmaß und/oder die Art eines Mangels, beispielsweise ein Einschluss, an dem Werkstück 102 an die eine oder die mehreren Behandlungseinheiten 116 übergeben.

Wenn das Werkstück 102, welches von der Kontrollstation 146 als mangelhaft erkannt wurde, automatisch zur Nachbehandlungsstation 180 zugeführt wird, kann das Werkstück 102 hierdurch auch automatisch nachbehandelt werden.

Insbesondere ist vorzugsweise kein Nutzereingriff erforderlich, um das Werkstück 102 in einen mangelfreien Zustand zu versetzen.

Da vorzugsweise nicht jedes Werkstück 102 nachbehandelt werden muss, ist die Fördervorrichtung 112 vorzugsweise nach dem Trockner 110 eine fahrzeugbasierte Fördervorrichtung 112.

Als solche umfasst diese insbesondere mehrere Fahrzeuge 184, welche insbesondere als selbstfahrende Transportfahrzeuge ausgebildet sind und unabhängig voneinander insbesondere autonom, verfahrbar sind.

Die Fahrzeuge 184 sind dabei insbesondere auf einem Hallenboden oder sonstigem Boden frei verfahrbar.

Die Werkstücke 102 sind insbesondere mittels einer Adaptervorrichtung 186 an einem oder mehreren Aufnahmeelementen 188 des Fahrzeugs 184 an demselben angeordnet.

Mittels des Fahrzeugs 184 können die Werkstücke 102 insbesondere nach Bedarf zu einer Übergabestation 190 der Nachbehandlungsstation 180 zugeführt und dort beispielsweise an eine Stationsfördervorrichtung 192 übergeben werden.

Die Fahrzeuge 184 stehen dann für weitere Transportaufgaben zur Verfügung, während das jeweilige Werkstück 102 mittels der Stationsfördervorrichtung 192 in einen Behandlungsraum der Nachbehandlungsstation 180 eingebracht, durch denselben hindurchgeführt und/oder aus demselben herausgeführt wird.

An einer insbesondere weiteren Übergabestation 190 können die nachbehandelten Werkstücke 102 vorzugsweise erneut von der Stationsfördervorrichtung 192 auf die Fördervorrichtung 112, beispielsweise auf die Fahrzeuge 184, übergeben werden.

Wie Fig. 6 zu entnehmen ist, umfasst die Nachbehandlungsstation 180 vorzugsweise selbst eine oder mehrere Kontrollstationen 146 oder grenzt an eine oder mehrere Kontrollstationen 146 an.

Eine Kontrollstation 146 an der Auslassschleuse 144 kann hierdurch entbehrlich sein.

Ferner kann hierdurch optional direkt im Anschluss an eine Nachbehandlung in der Nachbehandlungsstation 180 eine erneute Kontrolle mittels einer Kontrollstation 146 erfolgen.

Dadurch, dass bei der Behandlungsanlage 100 zahlreiche Sensoren 154 und eine oder mehrere Kontrollstationen 146 vorgesehen sind, kann die Behandlungsanlage 100 vorzugsweise mit einem hohen Automatisierungsgrad betrieben werden und vorzugsweise eine hochgenaue Mängelerfassung und/oder eine automatische Mängelbeseitigung erzielt werden.

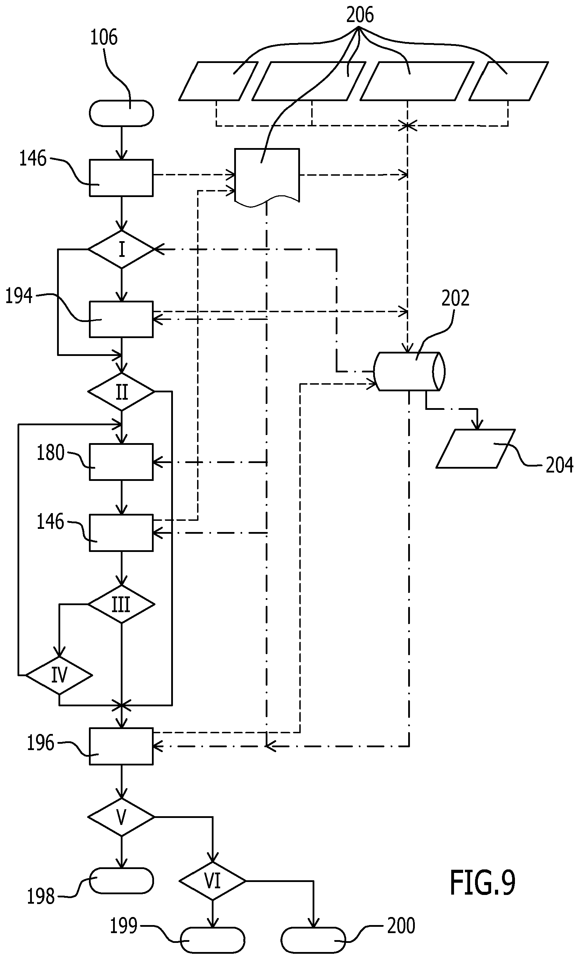

Wie beispielhaft Fig. 9 zu entnehmen ist, kann bei einer Betriebsweise der Behandlungsanlage 100 insbesondere Folgendes vorgesehen sein:
1. Nach einer Behandlungsstation 106 fahren alle Werkstücke 102 in eine automatische Fehlerkontrolle (Kontrollstation 146);
2. Anschließend wird eine bestimme Auswahl (z.B. jede zweite) der Werkstücke 102 zu einer Qualitätsmessung geleitet (Qualitätsinspektionsstation 194). Die Auswahl der Werkstücke 102 ist beispielsweise abhängig vom Farbton, des Werkstücktyps, der Werkstückart, des Prozesses oder weitere Informationen.
   a. Gemessen wird dabei beispielsweise: Schichtdicke, Struktur und Farbton und nur an Stelle die keine Fehler vorweisen (beurteilt anhand der Daten der Kontrollstation 146)
   b. Diese Messungen laufen nicht immer nach demselben Schema ab, sondern werden vorzugsweise prozesstechnisch gesteuert, insbesondere nach Bedarf.
3. In der automatischen Nachbehandlungsstation 180 werden die zuvor erkannten Fehler behoben. Werkstücke 102, die keinen Fehler aufweisen oder bereits in einer vorherigen Station (146 und/oder 194) als "Ausschuss" oder Spot-Repair-Werkstücke 102 ermittelt wurden, werden direkt zu einer manuellen Nachbehandlungsstation 196 gefördert.
4. Werkstücke 102 aus der automatischen Nachbehandlungsstation 180 werden in der weiteren Kontrollstation 146 erneut auf Fehler kontrolliert - u.U. sogar dieselben wie zuvor. Ein erneutes "kontrolliert" zeigt, ob die Fehler beseitigt wurden oder ob sogar neue dazu gekommen sind. Falls weiterhin Fehler vorhanden sind, werden die Werkstücke 102 zurück zur automatischen Nachbehandlungsstation 180 geleitet.
5. Alle Werkstücke 102 werden zu einem manuellen Arbeitsplatz (insbesondere einer manuellen Nachbehandlungsstation 196) gefördert und spezifisch kontrolliert - ggf. auch nachgearbeitet. Kleinere Fehler werden direkt bearbeitet, bei größeren Fehlern wird das Werkstück 102 zur Spot-Repair-Station 199 weitergeleitet.
6. Abschließend werden die Werkstück 102 in das Lager 198 (ggf. Hochregallager) transportiert.

Die Stationen 146, 194, 180, 196, 199 können beispielsweise jeweils als Box oder Einzelplatz ausgeführt sein. Die Werkstücke 102 können insbesondere mit einem Fahrzeug 184 hingefördert, abgelegt und/oder weggefördert werden.

**Wie in** **Fig.** 9 zu sehen ist, wird an mehreren Stellen über den nächsten Prozessschritt entschieden. Hierfür werden vorzugsweise Daten (Werkstückparameter, Anlagenparameter, Betriebsergebnisparameter) aus der Datenbank 202 zur Entscheidungsfindung herangezogen:
- Entscheidung I - Zur Qualitätsmessung?:
   Angeordnet nach der Kontrollstation 146, wird entschieden, ob das Werkstück 102 zur Qualitätsmessung geleitet wird oder zum Entscheidungsfeld II.
   Zur Qualitätsmessung werden folgende Werkstücke 102 geleitet:
      ∘ eine Stichprobe von X - kann vom Hersteller entschieden werden
      ∘ aufgrund Information aus dem werkstückspezifischen Datensatz, Rohbau, Verfahrenstechnik, Prozesstechnik oder Farbmischraum (welche als Input 206 in Fig. 9 angedeutet sind)
      ∘ diejenigen Werkstücke 102, welche eine Störung oder eine Abweichung im Prozess hatten
      ∘ Werkstücke 102, bei welchen ein neuer Farbton appliziert wurde
      ∘ neue Werkstücke
      ∘ markierte Werkstücke 102, d.h. Werkstücke 102, die im Prozessverlauf (beispielsweise Rohbau oder Lackiererei) aus unterschiedlichen Gründen für die Kontrolle markiert wurden. Dadurch muss ein Werkstück nicht umständlich verfolgt werden. Beim Markieren hat der Werker die Möglichkeit anzugeben, welcher Teil des Werkstücks genauer kontrolliert werden soll. Ebenfalls wird der Prozessschritt mitgeloggt, von dem das Werkstück 102 markiert wurde.
   Wenn keine dieser Kriterien erfüllt ist, folgt Entscheidung II
- Entscheidung II - Zur Nachbehandlung?:
   Angeordnet nach der Qualitätsinspektionsstation 194 und nach der Entscheidung I, wird entschieden, ob das Werkstück 102 zur automatischen Nachbehandlungsstation 180, insbesondere zum automatischen Schleifen und Polieren, geleitet wird oder zur Entscheidung III.
   Zur automatischen Nachbehandlungsstation 180, insbesondere zum automatischen Schleifen und Polieren, werden folgende Werkstücke 102 geleitet:
      ∘ diejenigen, die einen Fehler vorweisen, der geschliffen oder poliert werden kann
   Wenn dieses Kriterium nicht erfüllt ist, folgt Entscheidung III
- Entscheidung III - Werkstück i.O.?
   Angeordnet nach der zweiten Fehlerkontrolle (Kontrollstation 146), wird entschieden, ob das jeweilige Werkstück 102 zum manuellen Arbeitsplatz (manuelle Nachbehandlungsstation 196) oder zur Entscheidung IV geleitet wird. Zur manuellen Nachbehandlungsstation 196 werden folgende Werkstücke 102 geleitet:
      ∘ Werkstücke 102, die nach der zweiten Fehlerkontrolle (Kontrollstation 146) als i.O. bewertet werden.
      ∘ Alle Fehlstellen konnten erfolgreich bearbeitet werden
   Wenn keine dieser Kriterien erfüllt ist, folgt Entscheidung IV
- Entscheidung IV - Anzahl durchlauf >x?
   Angeordnet nach der Entscheidung III wird entschieden, ob das Werkstück zur manuellen Nachbehandlungsstation 196 oder zur automatischen Nachbehandlungsstation 180, insbesondere zum automatischen Schleifen und Polieren, geleitet wird.
   Zum manuellen Nachbehandlungsstation 196 werden folgende Werkstücke 102 geleitet, die alle untenstehenden Kriterien erfüllen:
      ∘ Werkstücke 102, die noch fehlerhaft sind
      ∘ einzelne Fehlstellen wurden mindestens x Mal bearbeitet
   Wenn nicht alle dieser Kriterien erfüllt sind, wird erneut das Werkstück 102 in der automatischen Nachbehandlungsstation 180 nachbearbeitet.
- Weitere oder alternative Entscheidung III:
   Angeordnet nach der zweiten Fehlerkontrolle (Kontrollstation 146) und nach der Entscheidung II wird entschieden, ob das Werkstück 102 zum manuellen Arbeitsplatz (manuelle Nachbehandlungsstation 196) geleitet wird oder zur Entscheidung IV.
   Zum manuellen Arbeitsplatz werden folgende Werkstücke 102 geleitet:
      ∘ Anfänglich alle
      ∘ Werkstücke 102, die nicht komplett auf Fehler abgesucht werden konnten
      ∘ Werkstücke 102 von einem neuen Typ, mit einer neuen Farbe oder weiteren Merkmalen die ausprobiert wurden
      ∘ Fehlerhafte Werkstücke 102 nach der Fehlerkontrolle 2
      ∘ Eine Stichprobe von X - Kann vom Hersteller entschieden werden
      ∘ **Fehlerhafte** Werkstücke 102 nach der Fehlerkontrolle 1, wenn die Fehler nicht durch automatisches Schleifen oder Polieren ausgebessert werden können
      ∘ Werkstücke 102, die vom Betreiber ausgewählt wurden
      ∘ Werkstücke 102, die Auffälligkeiten vom Prozess, Rohbau, Verfahrenstechnik oder weitere vorweisen
   Wenn keine dieser Kriterien erfüllt ist, folgt Entscheidung V
- Entscheidung V:
   Angeordnet nach dem manuellen Arbeitsplatz (manuelle Nachbehandlungsstation 196) und nach der Entscheidung IV wird entschieden, ob das Werkstück 102 zum Lager 198 geleitet wird oder zur Entscheidung VI.
   Zum Lager 198 werden folgende Werkstücke 102 geleitet
      ∘ Werkstücke 102, die i.O. sind
- Entscheidung VI:
   Angeordnet nach der Entscheidung V wird entschieden, ob das Werkstück 102 zur Spot-Repair-Station 199 gefördert wird oder als Ausschuss 200 anzusehen ist. Im letzteren Fall kann das Werkstück 102 als sogenannter 2. Läufer deklariert und ggf. ebenfalls ins Lager 198 geleitet werden.
   Zur Spot-Repair-Station 199 werden folgende Werkstücke geleitet:
      ∘ Fehlerhafte Werkstücke 102 nach der Fehlerkontrolle 1 (Kontrollstation 146), wenn der Fehler nicht automatisch und nicht manuell auspoliert werden kann
      ∘ Fehlerhafte Werkstücke 102 nach dem manuellen Arbeitsplatz
      ∘ Werkstücke 102 mit Fehlern, die nur an wenigen Werkstücken 102 sind und noch gerichtet werden können.

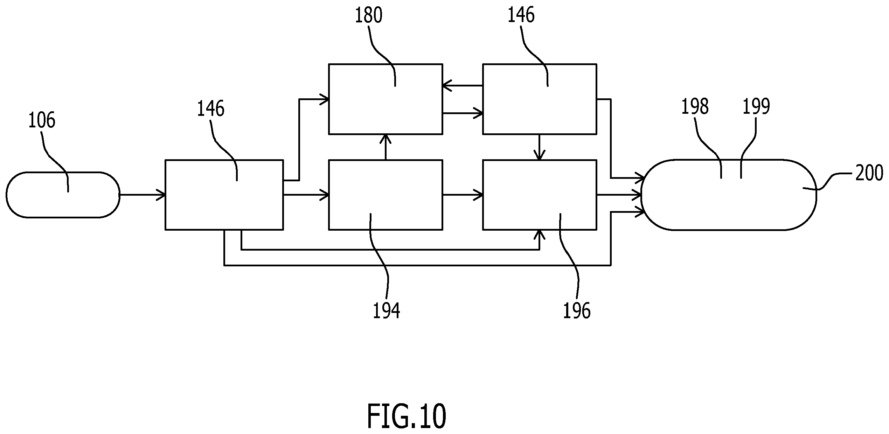

Anhand der oben beschriebenen Entscheidungsfelder ergeben sich für das Werkstück 102 unterschiedliche Bewegungsmöglichkeiten, die in der Fig. 10 erneut dargestellt sind.

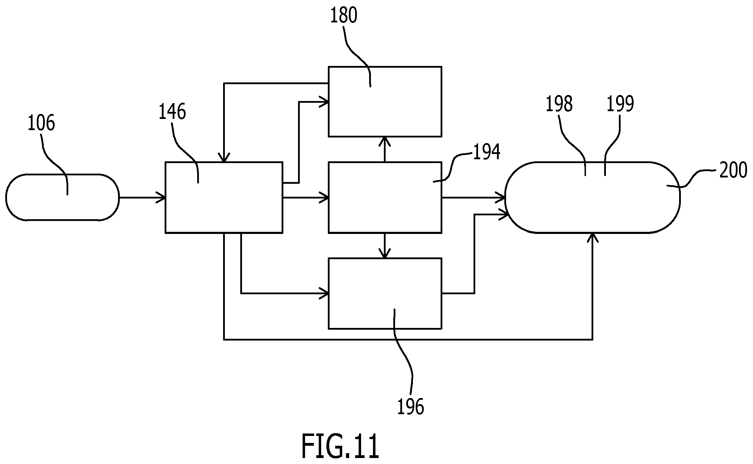

Wenn man die Kontrollstationen 146 zusammenfasst, ergeben sich die Bewegungsmöglichkeiten gemäß Fig. 11.

## Patentansprüche

1. Verfahren zur Kontrolle von Werkstücken (102) in Form von durch eine oder mehrere Behandlungsstationen (106) behandelten Fahrzeugkarosserien (104), wobei die eine oder die mehreren Behandlungsstationen (106) als Lackieranlage ausgebildet sind, wobei das Verfahren Folgendes umfasst:
- Ermitteln eines oder mehrerer Werkstückparameter der zu kontrollierenden Werkstücke (102) mittels einer automatischen Kontrollstation (146);
- Kategorisieren der Werkstücke (102) abhängig von mindestens einem der mittels der Kontrollstation (146) ermittelten Werkstückparameter,
wobei eine Auswahl aus sämtlichen hergestellten und/oder behandelten Werkstücken (102) im Anschluss an die Kontrollstation (146) einer Qualitätsinspektionsstation (194) zugeführt wird,
wobei lediglich solche Werkstücke (102) der Qualitätsinspektion unterzogen werden, welche mittels der Kontrollstation (146) als mangelfrei einkategorisiert wurden, und
wobei Ergebnisse der Qualitätsinspektion zur automatischen Justierung eines oder mehrerer Anlagenparameter in der einen oder den mehreren Behandlungsstationen (106) zur Behandlung der Werkstücke (102) verwendet werden.

2. Verfahren nach Anspruch 1, **dadurch gekennzeichnet, dass** Werkstücke (102) nachbehandelt werden, bei welchen mittels der Kontrollstation (146) ein oder mehrere Werkstückparameter ermittelt wurden, welche als mangelhaft einzustufen sind oder welche einen Mangel an dem Werkstück (102) zur Folge haben.

3. Verfahren nach einem der Ansprüche 1 oder 2, **dadurch gekennzeichnet, dass** Werkstücke (102) keiner Nachbehandlung unterzogen werden, wenn sämtliche mittels der Kontrollstation (146) ermittelten Werkstückparameter als mangelfrei einzustufen sind und keine Mängel an dem Werkstück (102) zur Folge haben.

4. Verfahren nach Anspruch 1, **dadurch gekennzeichnet, dass** die Auswahl der der Qualitätsinspektionsstation (194) zuzuführenden Werkstücke (102) basierend auf gemessenen und/oder berechneten und/oder simulierten Werkstückparametern und/oder basierend auf gemessenen und/oder berechneten und/oder simulierten Behandlungsergebnisparametern getroffen wird, insbesondere basierend auf einem oder mehreren der folgenden Parameter:
- Farbton und/oder Helligkeit und/oder Farbmetrik "Colour Match" und/oder Verlauf und/oder Glanzgrad einer Beschichtung;
- Güte einer Beschichtung und/oder einer Substratoberfläche, insbesondere Ebenheit und/oder Rauigkeit einer Beschichtung, insbesondere einer jeden oder einzelner Schichten;
- Gleichmäßigkeit einer Schichtdicke einer Beschichtung;
- Dicke einer Beschichtung;
- Härte einer Beschichtung;
- Chemische Zusammensetzung einer Beschichtung, insbesondere Vernetzungsgrad und/oder Lösungsmittelgehalt;
- Informationen über die Art und/oder den Typ des jeweiligen Werkstücks (102);
- Informationen über physikalische und/oder produktionstechnische Werkstückkennzahlen;
- eine individuelle Werkstückidentifikationsnummer;
- Informationen über eine der Behandlung vorhergehende Herstellung und/oder Bearbeitung des jeweiligen Werkstücks (102);
- Informationen über eine der Behandlung nachfolgende Nachbehandlung und/oder Weiterbearbeitung des jeweiligen Werkstücks (102);
- Informationen über gemessene, simulierte und/oder erwartete Fehlstellen oder sonstige Qualitätsmängel an dem jeweiligen Werkstück (102), insbesondere Position und/oder Ausmaß von Beschichtungsfehlern.

5. Verfahren nach einem der Ansprüche 1 und 4, **dadurch gekennzeichnet, dass** bei der Qualitätsinspektion einer oder mehrere der folgenden Parameter gemessen werden:
- Farbton und/oder Helligkeit und/oder Farbmetrik "Colour Match" und/oder Verlauf und/oder Glanzgrad einer Beschichtung;
- Güte einer Beschichtung und/oder einer Substratoberfläche, insbesondere Ebenheit und/oder Rauigkeit einer Beschichtung, insbesondere einer jeden oder einzelner Schichten;
- Gleichmäßigkeit einer Schichtdicke einer Beschichtung;
- Dicke einer Beschichtung;
- Härte einer Beschichtung;
- Chemische Zusammensetzung einer Beschichtung, insbesondere Vernetzungsgrad und/oder Lösungsmittelgehalt;
- Verunreinigungsgrad einer Beschichtung;
- Reflexionseigenschaften einer Werkstückoberfläche;
- Absorptionseigenschaften einer Werkstückoberfläche;
- Emissionseigenschaften einer Werkstückoberfläche.

6. Verfahren nach einem der Ansprüche 1, 4 und 5, **dadurch gekennzeichnet, dass** bei der Qualitätsinspektion nur an denjenigen Stellen der Werkstücke (102) Qualitätsmessungen durchgeführt werden, welche gemäß einem Ergebnis der Kontrolle in der Kontrollstation (146) mangelfrei sind.

7. Verfahren nach einem der Ansprüche 1, 4, 5 und 6, **dadurch gekennzeichnet, dass** basierend auf Ergebnissen der Qualitätsinspektion eine Justierung eines oder mehrerer Anlagenparameter, insbesondere in einer oder mehreren Behandlungsstationen (106) zur Behandlung der Werkstücke (102), selbst dann durchgeführt wird, wenn der eine oder die mehreren Anlagenparameter innerhalb vorgegebener Grenzwerte liegen, wobei insbesondere bereits Tendenzen in einer zeitlichen Entwicklung des einen oder der mehreren Anlagenparameter abgemildert oder kompensiert werden.

8. Kontrollanlage zum Kontrollieren von Werkstücken (102) in Form von durch eine oder mehrere Behandlungsstationen (106) behandelten
Fahrzeugkarosserien (104), wobei die eine oder mehrere Behandlungsstationen (106) als Lackieranlage ausgebildet sind,
wobei die Kontrollanlage Folgendes umfasst:
- eine oder mehrere Kontrollstationen (146), eingerichtet zum automatischen Ermitteln eines oder mehrerer Werkstückparameter der zu kontrollierenden Werkstücke (102);
- eine Steuervorrichtung, eingerichtet und ausgebildet, die Werkstücke (102) abhängig von mindestens einem der mittels der einen oder den mehreren Kontrollstationen (146) ermittelten Werkstückparameter zu kategorisieren;
- eine Qualitätsinspektionsstation (194) **im** Anschluss an die eine oder die mehreren Kontrollstationen (146) zur Qualitätsinspektion eines oder mehrerer Werkstücke (102),
wobei die Kontrollanlage derart eingerichtet ist, dass eine Auswahl aus sämtlichen hergestellten und/oder behandelten Werkstücken im Anschluss an die Kontrollstation (146) einer Qualitätsinspektionsstation (194) zugeführt wird,
wobei lediglich solche Werkstücke der Qualitätsinspektion unterzogen werden, welche mittels der Kontrollstation als mangelfrei einkategorisiert wurden,
wobei die Kontrollanlage derart eingerichtet ist, dass die Ergebnisse der Qualitätsinspektion zur automatischen Justierung eines oder mehrerer Anlagenparameter in der einen oder den mehreren Behandlungsstationen (106) zur Behandlung der Werkstücke (102) verwendet werden.

9. Kontrollanlage nach Anspruch 8, **dadurch gekennzeichnet, dass** eine oder mehrere Kontrollstationen (146) jeweils eine oder mehrere Kontrolleinheiten (150) umfassen, welche als Roboter ausgebildet sind oder einen Roboter umfassen.

10. Kontrollanlage nach einem der Ansprüche 8 oder 9, **dadurch gekennzeichnet, dass** eine oder mehrere Kontrollstationen (146) als ein Portal (148) ausgebildet sind, durch welches die Werkstücke (102) zur Kontrolle derselben hindurchförderbar sind.

11. Behandlungsanlage (100) zum Behandeln von Werkstücken (102), insbesondere zum Behandeln von Fahrzeugkarosserien (104), wobei die Behandlungsanlage (100) Folgendes umfasst:
- eine oder mehrere Behandlungsstationen (106) zum Behandeln der Werkstücke (102);
- eine Kontrollanlage zum Kontrollieren von Werkstücken (102) nach einem der Ansprüche 8 bis 10;
- eine Fördervorrichtung (112), mittels welcher Werkstücke (102) zu einer oder mehreren Kontrollstationen (146) der Kontrollanlage hin, durch die eine oder die mehreren Kontrollstationen (146) hindurch und/oder von der einen oder den mehreren Kontrollstationen (146) weg förderbar sind und/oder mittels welcher Werkstücke (102) zu einer oder mehreren Behandlungsstationen (106) hin, durch eine oder mehrere Behandlungsstationen (106) hindurch und/oder von der einen oder den mehreren Behandlungsstationen (106) weg förderbar sind.

12. Behandlungsanlage (100) nach Anspruch 11, **dadurch gekennzeichnet, dass** eine oder mehrere Kontrollstationen (146) in eine Behandlungsstation (106) und/oder in eine Nachbehandlungsstation (180) der Behandlungsanlage (100) integriert sind und dass mittels einer oder mehrerer Behandlungseinheiten (116) der Behandlungsstation (106) und/oder der Nachbehandlungsstation (180), welche jeweils eine oder mehrere Kontrolleinheiten (150) aufweisen, eine Kontrolle des jeweiligen Werkstücks (102) durchführbar ist.

## Claims

1. Method for checking workpieces (102) in the form of vehicle bodies (104) treated by one or more treatment stations (106), wherein the one or more treatment stations (106) is/are designed as a painting system, wherein the method comprises:
- determining one or more workpiece parameters of the workpieces (102) to be checked by means of an automatic checking station (146);
- categorizing the workpieces (102) depending on at least one of the workpiece parameters determined by means of the checking station (146),
wherein a selection of all manufactured and/or treated workpieces (102) is fed to a quality inspection station (194) downstream of the checking station (146),
wherein only those workpieces (102) which have been categorized as non-defective by means of the checking station (146) are subjected to the quality inspection, and
wherein results of the quality inspection are used to automatically adjust one or more system parameters in the one or more treatment stations (106) for treating workpieces (102).

2. Method according to Claim 1, **characterized in that** workpieces (102) for which one or more workpiece parameters which are to be classified as defective or which result in a defect in the workpiece (102) have been determined by means of the checking station (146) are post-treated.

3. Method according to either of Claims 1 and 2, **characterized in that** workpieces (102) are not subjected to post-treatment if all workpiece parameters determined by means of the checking station (146) are to be classified as non-defective and do not result in defects in the workpiece (102).

4. Method according to Claim 1, **characterized in that** the selection of the workpieces (102) to be fed to the quality inspection station (194) is made based on measured and/or calculated and/or simulated workpiece parameters and/or based on measured and/or calculated and/or simulated treatment result parameters, in particular based on one or more of the following parameters:
- hue and/or brightness and/or colour match and/or levelling and/or gloss of a coating;
- quality of a coating and/or a substrate surface, in particular flatness and/or roughness of a coating, in particular of each or individual layers;
- uniformity of a layer thickness of a coating;
- thickness of a coating;
- hardness of a coating;
- chemical composition of a coating, in particular degree of crosslinking and/or solvent content;
- information about the nature and/or type of the respective workpiece (102);
- information about physical and/or production-related workpiece metrics;
- an individual workpiece identification number;
- information about manufacture and/or processing of the respective workpiece (102) prior to the treatment;
- information about post-treatment and/or further processing of the respective workpiece (102) after the treatment;
- information about measured, simulated and/or expected defects or other quality issues on the respective workpiece (102), in particular the position and/or extent of coating defects.

5. Method according to either of Claims 1 and 4, **characterized in that** one or more of the following parameters are measured during the quality inspection:
- hue and/or brightness and/or colour match and/or levelling and/or gloss of a coating;
- quality of a coating and/or a substrate surface, in particular flatness and/or roughness of a coating, in particular of each or individual layers;
- uniformity of a layer thickness of a coating;
- thickness of a coating;
- hardness of a coating;
- chemical composition of a coating, in particular degree of crosslinking and/or solvent content;
- degree of contamination of a coating;
- reflection properties of a workpiece surface;
- absorption properties of a workpiece surface;
- emission properties of a workpiece surface.

6. Method according to any of Claims 1, 4 and 5, **characterized in that** quality measurements are carried out during the quality inspection only at those points of the workpieces (102) which are non-defective according to a result of the checking in the checking station (146).

7. Method according to any of Claims 1, 4, 5 and 6, **characterized in that** adjustment of one or more system parameters, in particular in one or more treatment stations (106) for treating the workpieces (102), is carried out based on results of the quality inspection even when the one or more system parameters are within specified limit values, wherein in particular trends in the development of the one or more system parameters over time are already mitigated or compensated.

8. Checking system for checking workpieces (102) in the form of vehicle bodies (104) treated by one or more treatment stations (106), wherein the one or more treatment stations (106) are designed as a painting system, wherein the checking system comprises the following:
- one or more checking stations (146), configured for automatically determining one or more workpiece parameters of the workpieces (102) to be checked;
- a control device, configured and designed to categorize the workpieces (102) depending on at least one of the workpiece parameters determined by means of one or more checking stations (146),
- a quality inspection station (194) downstream of the one or more checking stations (146) for inspecting the quality of one or more workpieces (102),
wherein the checking system is configured in such a way that a selection of all manufactured and/or treated workpieces is fed to a quality inspection station (194) downstream of the checking station (146),
wherein only those workpieces which have been categorized as non-defective by means of the checking station are subjected to the quality inspection, and
wherein the checking system is configured in such a way that the results of the quality inspection are used to automatically adjust one or more system parameters in the one or more treatment stations (106) for treating workpieces (102).

9. Checking system according to Claim 8, **characterized in that** one or more checking stations (146) each comprise one or more checking units (150) which are designed as a robot or comprise a robot.

10. Checking system according to either of Claims 8 and 9, **characterized in that** one or more checking stations (146) is/are designed as a gantry (148) through which the workpieces (102) can be conveyed in order to be checked.

11. Treatment system (100) for treating workpieces (102), in particular for treating vehicle bodies (104), wherein the treatment system (100) comprises the following:
- one or more treatment stations (106) for treating workpieces (102);
- a checking system for checking workpieces (102) according to any of Claims 8 to 10;
- a conveyor device (112) by means of which workpieces (102) can be conveyed to one or more checking stations (146) of the checking system, through the one or more checking stations (146) and/or away from the one or more checking stations (146) and/or by means of which workpieces (102) can be conveyed to one or more treatment stations (106), through one or more treatment stations (106) and/or away from the one or more treatment stations (106).

12. Treatment system (100) according to Claim 11, **characterized in that** one or more checking stations (146) are integrated into a treatment station (106) and/or into a post-treatment station (180) of the treatment system (100) and **in that** checking of the respective workpiece (102) can be carried out by means of one or more treatment units (116) of the treatment station (106) and/or the post-treatment station (180), which each have one or more checking units (150).

## Revendications

1. Procédé de contrôle de pièces (102) sous la forme de carrosseries de véhicules (104) traitées par une ou plusieurs stations de traitement (106), les une ou plusieurs stations de traitement (106) étant réalisées sous forme d'installation de peinture, le procédé comprenant les étapes suivantes :
- la détermination d'un ou plusieurs paramètres de pièce des pièces à contrôler (102) au moyen d'une station de contrôle automatique (146) ;
- la catégorisation des pièces (102) en fonction d'au moins un des paramètres de pièce déterminés au moyen de la station de contrôle (146),
une sélection parmi toutes les pièces fabriquées et/ou traitées (102) étant acheminée vers une station d'inspection de qualité (194) après la station de contrôle (146),
seules les pièces (102) qui ont été classées comme exemptes de défauts au moyen de la station de contrôle (146) étant soumises à l'inspection de qualité, et
les résultats de l'inspection de qualité étant utilisés pour ajuster automatiquement un ou plusieurs paramètres d'installation dans la ou les stations de traitement (106) pour le traitement des pièces (102).

2. Procédé selon la revendication 1, **caractérisé en ce que** les pièces (102) sont post-traitées lorsque la station de contrôle (146) a déterminé un ou plusieurs paramètres de pièce qui doivent être classés comme défectueux ou qui entraînent un défaut sur la pièce (102).

3. Procédé selon l'une quelconque des revendications 1 ou 2, **caractérisé en ce que** les pièces (102) ne sont soumises à aucun post-traitement si tous les paramètres de pièce déterminés au moyen de la station de contrôle (146) sont classés comme exempts de défauts et n'entraînent aucun défaut sur la pièce (102).

4. Procédé selon la revendication 1, **caractérisé en ce que** la sélection des pièces (102) à acheminer vers la station d'inspection de qualité (194) est effectuée sur la base de paramètres de pièce mesurés et/ou calculés et/ou simulés et/ou sur la base de paramètres de résultat de traitement mesurés et/ou calculés et/ou simulés, notamment sur la base d'un ou plusieurs des paramètres suivants :
- teinte et/ou luminosité et/ou colorimétrie "Colour Match" et/ou évolution et/ou degré de brillance d'un revêtement;
- qualité d'un revêtement et/ou d'une surface de substrat, en particulier planéité et/ou rugosité d'un revêtement, notamment de chaque couche ou de couches individuelles;
- uniformité d'une épaisseur de couche d'un revêtement;
- épaisseur d'un revêtement;
- dureté d'un revêtement;
- composition chimique d'un revêtement, en particulier, degré de réticulation et/ou teneur en solvant;
- informations sur la nature et/ou le type de pièce (102) respective;
- informations sur des indicateurs physiques et/ou des techniques de production de pièces à usiner;
- un numéro d'identification de pièce individuel;
- informations sur une fabrication et/ou un usinage de la pièce (102) respective précédant le traitement;
- informations sur un post-traitement et/ou un usinage ultérieur de la pièce (102) respective;
- informations sur des points de défauts mesurés, simulés et/ou attendus ou d'autres défauts de qualité de la pièce (102) respective, notamment position et/ou ampleur de défauts de revêtement.

5. Procédé selon l'une quelconque des revendications 1 et 4, **caractérisé en ce que**, lors de l'inspection de qualité, un ou plusieurs des paramètres suivants sont mesurés :
- teinte et/ou luminosité et/ou colorimétrie "Colour Match" et/ou évolution et/ou degré de brillance d'un revêtement;
- qualité d'un revêtement et/ou d'une surface de substrat, en particulier planéité et/ou rugosité d'un revêtement, notamment de chaque couche ou de couches individuelles;
- uniformité d'une épaisseur de couche d'un revêtement;
- épaisseur d'un revêtement;
- dureté d'un revêtement;
- composition chimique d'un revêtement, en particulier, degré de réticulation et/ou teneur en solvant;
- degré de contamination d'un revêtement;
- propriétés de réflexion d'une surface de pièce;
- propriétés d'absorption d'une surface de pièce;
- propriétés d'émission d'une surface de pièce.

6. Procédé selon l'une quelconque des revendications 1, 4 et 5, **caractérisé en ce que**, lors de l'inspection de qualité, les mesures de qualité ne sont effectuées qu'aux endroits des pièces (102) qui, selon le résultat du contrôle effectué dans la station de contrôle (146), sont exempts de défauts.

7. Procédé selon l'une quelconque des revendications 1, 4, 5 et 6, **caractérisé en ce que**, sur la base de résultats de l'inspection de qualité, un ajustement d'un ou plusieurs paramètres d'installation, notamment dans une ou plusieurs stations de traitement (106) pour le traitement des pièces (102) est réalisé même si le ou les paramètres d'installation se situent dans le cadre de valeurs limites prédéfinies, les tendances dans l'évolution dans le temps du ou des paramètres d'installation étant notamment déjà atténuées ou compensées.

8. Installation de contrôle pour le contrôle de pièces (102) sous la forme de carrosseries de véhicules (104) traitées par une ou plusieurs stations de traitement (106), les une ou plusieurs stations de traitement (106) étant réalisées sous forme d'installation de peinture, l'installation de contrôle comprenant les éléments suivants :
- une ou plusieurs stations de contrôle (146), adaptées pour déterminer automatiquement un ou plusieurs paramètres de pièce des pièces à contrôler (102) ;
- un dispositif de commande, adapté et configuré pour classer les pièces (102) en fonction d'au moins un des paramètres de pièce déterminés au moyen de la ou des stations de contrôle (146) ;
- une station d'inspection de qualité (194) après la ou les stations de contrôle (146) pour l'inspection de qualité d'une ou plusieurs pièces (102),
l'installation de contrôle étant adaptée pour acheminer une sélection parmi toutes les pièces fabriquées et/ou traitées vers une station d'inspection de qualité (194) après la station de contrôle (146),
seules les pièces qui ont été classées comme exemptes de défauts au moyen de la station de contrôle étant soumises à l'inspection de qualité,
l'installation de contrôle étant adaptée pour utiliser les résultats de l'inspection de qualité pour ajuster automatiquement un ou plusieurs paramètres d'installation dans la ou les stations de traitement (106) pour le traitement des pièces (102).

9. Installation de contrôle selon la revendication 8, **caractérisée en ce qu'**une ou plusieurs stations de contrôle (146) comprennent chacune une ou plusieurs unités de contrôle (150) qui sont configurées comme des robots ou comprennent un robot.

10. Installation de contrôle selon l'une quelconque des revendications 8 ou 9, **caractérisée en ce qu'**une ou plusieurs stations de contrôle (146) sont configurées comme un portique (148) à travers lequel les pièces (102) peuvent être transportées pour être contrôlées.

11. Installation de traitement (100) destinée au traitement de pièces (102), en particulier au traitement de carrosseries de véhicules (104), l'installation de traitement (100) comprenant:
- une ou plusieurs stations de traitement (106) destinées au traitement des pièces (102);
- une instalation de contrôle pour contrôler des pièces (102) selon l'une quelconque des revendications 8 à 10 ;
- un dispositif de transport (112), au moyen duquel des pièces (102) peuvent être transportées vers une ou plusieurs stations de contrôle (146) de l'installation de contrôle, à travers lesdites une ou plusieurs stations de contrôle (146) et/ou en s'éloignant desdites une ou plusieurs stations de contrôle (146), et/ou au moyen duquel des pièces (102) peuvent être transportées vers une ou plusieurs stations de traitement (106), à travers une ou plusieurs stations de traitement (106) et/ou en s'éloignant desdites une ou plusieurs stations de traitement (106).

12. Installation de traitement (100) selon la revendication 11, **caractérisée en ce qu'**une ou plusieurs stations de contrôle (146) sont intégrées dans une station de traitement (106) et/ou dans une station de post-traitement (180) de l'installation de traitement (100) et **en ce qu'**un contrôle de la pièce respective (102) peut être effectué au moyen d'une ou de plusieurs unités de traitement (116) de la station de traitement (106) et/ou de la station de post-traitement (180), qui présentent chacune une ou plusieurs unités de contrôle (150).
